# EUROPEAN PATENT SPECIFICATION

(11) **EP 3 695 994 B1**
(45) Date of publication and mention of the grant of the patent: **16.04.2025**
(21) Application number: 19157360.9
(22) Date of filing: 15.02.2019
(51) Int. Cl.: B60G 17/056

(54) **POSSIBILITIES FOR AUTOMATING A RAISING AND LOWERING AIR SPRING SUSPENSION SYSTEM**
MÖGLICHKEITEN ZUR AUTOMATISIERUNG DES HEBE- UND SENKVORGANGS EINER LUFTFEDERAUFHÄNGUNG
POSSIBILITÉS D'AUTOMATISATION D'UN SYSTÈME DE SUSPENSION À RESSORT PNEUMATIQUE DE LEVAGE ET D'ABAISSEMENT

(43) Date of publication of application: 19.08.2020
(73) Proprietor: KNORR-BREMSE Systeme für Nutzfahrzeuge GmbH, 80809 München (DE)
(72) Inventor: Otter, Ludwig, 81829 München (DE); Koncz, Laszlo, 6000 Kecskemét (HU)

(56) References cited:
- EP-A1- 2 957 441
- DE-A1- 102007 008 159
- DE-B4- 102007 008 159

## Description

The present invention relates to a cut off valve a pneumatic distribution device and an air spring suspension system.

Vehicles, especially trailers of commercial vehicles, comprise air spring suspension systems which are configured to equalize the vertical movement of the vehicle body while the vehicle is moved and which are configured to raise or lower the vehicle body in reaction to a raising or lowering control signal when the vehicle does not move. Usually the equalizing function of the vertical movement and the raising and lowering function of the vehicle body are realized by controlling an amount of compressed air in air bellows of the air spring suspension system. Usually these functions are realized by an air spring valve which is configured to execute the equalizing of the vehicle body and by a raising and lowering valve which is configured to execute the raising and lowering of the vehicle body.

In prior art, document is known. This document relates to a an air suspension device for raising and lowering the vehicle body of air-suspended vehicles with level control, with at least one level control valve connected to a compressed air supply, air suspension bellows assigned to at least one vehicle axle and with a control valve device for manually adjusting the level of the vehicle body while bypassing the level control valve. The air suspension device comprises at least one shut-off valve with at least two switching positions installed in a line connection of the level control valve with the air suspension bellows, and at least one manually operated control valve for ventilating the air suspension bellows. Document DE102007008159A1 discloses a known vehicle air suspension device comprising a cut off valve.

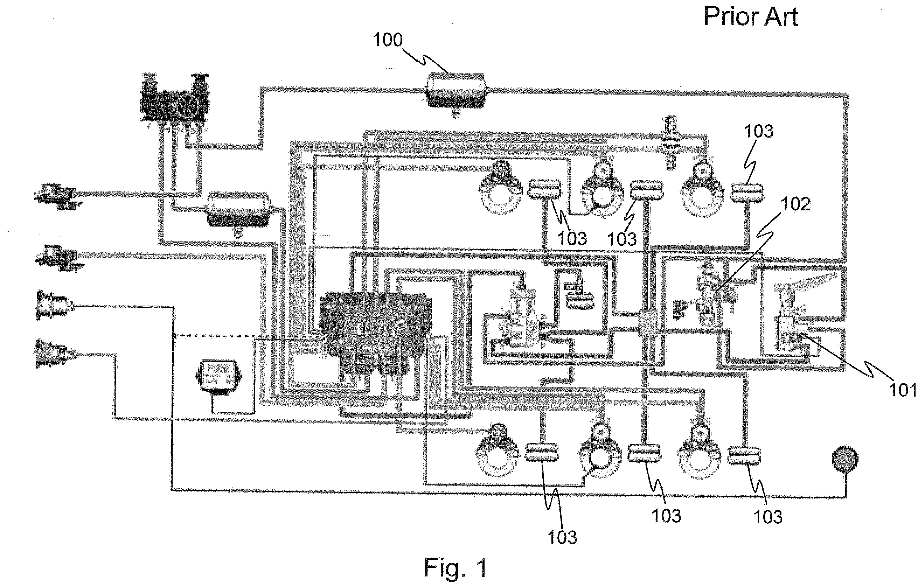

**Fig. 1** shows a pneumatic air spring suspension and braking system according to the prior art. This system comprises an air spring valve 102 and a raising and lowering valve 101 which is configured to be manually operated. The air spring valve 102 is connected to the vehicle body via a lever about which the vertical movement of the vehicle body can be transferred to the air spring valve 102. If the vehicle is moving, the air spring valve 102 controls an amount of air in air bellows 103 by supplying compressed air from an air storage 100 to the air bellows 103. The raising and lowering valve 101 is positioned between the air storage 100 and the air spring valve 102. In this state of the system, the raising and lowering valve 101 is in a passive state wherein it only supplies the compressed air from the air storage 100 to the air spring valve 102 and vice versa. When the vehicle stands still and the vehicle body shall be raised or lowered, an operator has to cut off the air spring valve 102 first because otherwise, the air spring valve 102 would equalize the height of the vehicle body and therefore the vehicle body cannot be raised or lowered.

To cut off the air spring valve 102 the operator has to move a lever of the raising and lowering valve 101 for example in an inwards direction of the raising and lowering valve 101 first, whereby the connection between the air spring valve 102 and the air bellows 103 is cut off. Afterwards, raising and lowering can be realized by for example turning the lever of the raising and lowering valve 101.

Systems according to Fig. 1 comprise the issue that before raising and lowering can be executed, the air spring valve 102 has to be cut off from the air bellows 103 first, wherein the cutting off has to be executed by the operator.

Therefore, it is the task of the present invention to solve this issue.

This task is solved by the subject matters of the independent patent claims. Advantageous embodiments are given by the subject matters of the dependent claims.

According to the invention, a cut off valve is provided for cutting off a communication between an air spring valve and at least one air bellow of a raise and lowering air spring suspension system for a vehicle, especially for a trailer, comprising:
- a first port configured to be connected to the air spring valve, and
- a second port configured to be connected to the at least one air bellow, wherein the cut off valve is configured to cut off a connection between the first port and the second port in reaction to a receiving of a first pneumatic control pressure.

Instead of a direct connection of the first port to the air spring valve, pneumatic lines or ports can be provided in between.

Instead of a direct connection of the second port to the at least one air bellow, pneumatic lines or ports can be provided in between.

The cut off valve is preferably configured to be provided in a distribution device which is essentially configured to control the amount of air of the at least one air bellow for raising and lowering of the vehicle body.

The cut off valve is configured to connect the first port and the second port if no first pneumatic control pressure is supplied and/or in reaction to a receiving of a second pneumatic control pressure.

The cut off valve comprises a first control port configured to receive the first control pressure and a piston with a first side configured to be pressurized by the first control pressure.

The cut off valve comprises a second control port configured to receive the second control pressure, wherein the piston has a second side configured to be pressurized by the second control pressure and the piston is configured to move the cut off valve in a connection position to connect the first port and the second port if the second side is pressurized by the second control pressure.

Alternatively or additionally, the cut off valve comprises a spring element configured to move the cut off valve into the connection position if no first control pressure is supplied.

The cut off valve is preferably configured to stay in an actual position if no control pressure is supplied.

The piston is preferably configured as a bistable piston which stays in its actual position if no control pressure is supplied.

Alternatively or additionally, the cut off valve is configured to store the first pneumatic control pressure in a control line after switching to a disconnection position to disconnect the first port from the second port. This allows the first control pressure to be maintained and to preferably act against the reset spring element. The cut off valve is preferably configured to switch into the disconnection position, when the control line is pressurized. To store the first control pressure in the control line, the cut off valve is further preferably comprising a second cut off valve which is configured to cut off a connection between the first control port and the control line in reaction to a receiving of the first control pressure via the first control port. Further preferably, if this connection is cut off, the control line stores the first control pressure.

To switch back to the connection position of the cut off valve, the control line has to be exhausted. Therefore, the control line is preferably connected to a valve which is configured to exhaust the control line.

According to the invention, a pneumatic distribution device is provided for a raise and lowering air spring suspension system for a vehicle, especially a trailer, wherein the distribution device is configured to control an amount of air of at least one air bellow, comprising:
- a cut off valve as described above,
- an air spring valve port configured to be connected to an air spring valve and connected to the first port of the cut off valve,
- at least one air bellow port configured to be connected to at least one air bellow and connected to the second port of the cut off valve, and
- at least one air storage port configured to be connected to at least one air storage, wherein
the pneumatic distribution device is configured to control the amount of air of the at least one air bellow in reaction to at least one pneumatic control signal.

The pneumatic distribution device is further preferably configured to be provided in an existing air spring suspension system.

Preferably, the pneumatic distribution device is comprising a raising control line configured to receive a pneumatic raising control signal and a lowering control line configured to receive a pneumatic lowering control signal.

The pneumatic distribution device is preferably further comprising a raising control port configured to receive a pneumatic raising control signal and configured to supply the pneumatic raising control signal to the raising control line, and/or a lowering control port configured to receive a pneumatic lowering control signal and configured to supply the pneumatic lowering control signal to the lowering control line. Alternatively, the pneumatic distribution device comprises at least one actuator configured to supply the pneumatic raising control signal to the raising control line and/or configured to supply the pneumatic lowering control signal to the lowering control line.

Preferably, the distribution device is configured to cut off a connection between the air spring valve port and the at least one air bellow port by the cut off valve in reaction to the pneumatic raising control signal or in reaction to the pneumatic lowering control signal which are supplied as a first control pressure to the first control port of the cut off valve.

Preferably, the distribution device is configured to connect the at least one air bellow port to the at least one air storage port in reaction to the pneumatic raising control signal and to connect the at least one air bellow port to an outlet port in reaction to the pneumatic lowering control signal.

Preferably, the pneumatic distribution device is further comprising a first valve configured to connect the at least one air storage port to a second valve if the pneumatic raising control signal is supplied to the raising control line.

Preferably, the pneumatic distribution device is further comprising the second valve configured to connect the at least one air bellow port to the first valve if the pneumatic raising control signal is supplied to the raising control line or if the pneumatic lowering control signal is supplied to the lowering control line.

Preferably, the first valve is configured to connect the second valve to the outlet port if no pneumatic raising control signal is supplied to the raising control line.

Further preferably, the second valve is configured to cut off the connection between the at least one air bellow port and the first valve if no pneumatic raising control signal is supplied to the raising control line or no pneumatic lowering control signal is supplied to the lowering control line.

Preferably, the pneumatic distribution device is further comprising a RTR valve configured to connect the second control port of the cut off valve to the at least one air storage port in reaction to a RTR confirmation signal or to a manual actuation. This RTR valve is preferably provided in the distribution device if the cut off valve is configured to stay in its actual position if no control pressure is supplied.

Alternatively or additionally, the pneumatic distribution device is comprising a RTR valve configured to evacuate the first control port of the cut off valve or the control line of the cut off valve in reaction to the RTR confirmation signal or to the manual actuation. This RTR valve is preferably provided in the distribution device if the cut off valve comprises a spring element to be reset to the connection position or if the cut off valve does not comprise a second control port.

Preferably, the pneumatic distribution device is further comprising a RTR reset port configured to be connected to an external RTR valve and wherein the RTR reset port is connected to the second control port of the cut off valve or to the first control port of the cut off valve. The RTR reset port is preferably configured to supply a second control pressure to the second control port of the cut off valve or to evacuate the first control port of the cut off valve in reaction to a RTR confirmation signal or to a manual actuation.

Alternatively or additionally, the RTR reset port can be configured to receive a RTR confirmation pressure. Preferably the RTR reset port is configured to supply the RTR confirmation pressure to the RTR valve.

Preferably, the RTR confirmation signal is an electrical or pneumatic signal.

Preferably, the pneumatic distribution device is further comprising a raising limitation valve configured to evacuate the raising control line in reaction to a raising limitation signal, and a raising limitation line to supply the raising limitation signal to the raising limitation valve.

Preferably, the pneumatic distribution device is further comprising a raising limitation port connected to the raising limitation line and further preferably configured to be connected to the air spring valve.

The raising limitation signal is preferably configured as a loss of pressure in the raising limitation line. Preferably, the distribution device is configured only to raise the vehicle body in reaction to the raising control signal, if the raising limitation line is pressurized.

According to the invention, an air spring suspension system for a vehicle body is provided, comprising:
- a pneumatic distribution device as described above,
- an air spring valve connected to the air spring valve port of the pneumatic distribution device,
- at least one air bellow connected to the at least one air bellow port of the pneumatic distribution device, and
- an air storage connected to the at least one air storage port of the pneumatic distribution device.

Preferably, the air spring suspension system is further comprising at least one actuator connected to the raising control port and/or to the lowering control port of the distribution device, wherein the at least one actuator is configured to supply a raising and/or lowering control signal to the raising control port and/or the lowering control port.

The at least one actuator is preferably configured as a slider, which is configured to control a pneumatic pressure as a raising and/or lowering control signal. The slider can preferably be configured to be moved rotationally or translationally.

In an advantageous form of embodiment one slider is provided which is configured to control the raising and the lowering control signal.

Preferably, the at least one actuator is comprising a reset port which is connected to a RTR output port of the distribution device and the at least one actuator is configured to switch in a position whereby no raising or lowering signal is supplied to the raising or lowering control port if compressed air is supplied to the reset port of the at least one actuator.

Alternatively or additionally, the air spring suspension system comprising an external RTR valve connected to the RTR reset port of the distribution device wherein the external RTR valve is configured to connect the RTR reset port to the at least one air storage port in reaction to a RTR confirmation signal or to a manual actuation or wherein the external RTR valve is configured to evacuate the RTR reset port in reaction to the RTR confirmation signal or to the manual actuation.

Preferably, the at least one actuator is configured to be locked in a locking position. Further preferably, the at least one actuator is configured to be reset automatically. These functionalities are described below.

Such an actor is preferably provided in a pneumatic control unit.

Preferably, a pneumatic control unit is provided for controlling a pneumatic pressure, especially a raising or lowering control signal as described above. This pneumatic control unit is preferably comprising:
- a housing,
- the at least one actuator configured to be manually moved along a total distance within the housing and configured to control a pneumatic pressure depending on its position on the total distance, and
- a reset mechanism configured to reset the at least one actuator into a position along the total distance if at least one predetermined reset condition is met.

Therefore, the at least one actuator can be reset by the reset mechanism.

Preferably, the air spring suspension system as described above comprises the pneumatic control unit.

The housing is preferably comprising at least one output port preferably configured to supply the pneumatic pressure controlled by the at least one actuator to other devices which are connected to the at least one output port. The at least one output port is preferably configured to be connected to the raising control port or to the lowering control port of the pneumatic distribution device. Further preferably the at least one output port is connected to the raising control port or to the lowering control port of the pneumatic distribution device.

The pneumatic control unit is preferably comprising at least one supply port configured to receive a pneumatic pressure. The supply port is preferably connected to an air storage of the air spring suspension system.

The pneumatic control unit is preferably comprising an exhaust port configured to exhaust the output port which is configured to supply the pneumatic pressure, preferably the pneumatic control pressure.

Preferably, the pneumatic control unit is configured that controlling operation of the pneumatic pressure comprises supplying the pneumatic pressure from the supply port to the output port in at least one position of the actuator along the total distance and connecting the output port to the exhaust port in order to exhaust the output port in at least another position of the actuator along the total distance.

Preferably, the predetermined reset condition is the appearance of a pneumatic confirmation pressure. This pneumatic confirmation pressure is preferably configured to unlock a reset element or to generate a force which is applied to the reset element. The pneumatic confirmation pressure is preferably supplied to the pneumatic control unit via a reset port.

The reset port is preferably configured to be connected to a RTR output port of a pneumatic distribution device as described above. Further preferably, the reset port is connected to a RTR output port of a pneumatic distribution device as described above.

Preferably, the reset mechanism is comprising a reset element configured to transmit a reset force or a reset torque to the at least one actuator, wherein the reset force or the reset torque is further preferably configured to move the at least one actuator into a position, preferably into an end position. The reset force or the reset torque is preferably transmitted from the reset element to the at least one actuator wherein the reset element gets into contact with the at least one actuator.

Preferably, the reset element is configured to transmit the reset force or the reset torque by converting the pneumatic confirmation pressure into the reset force. Additionally or alternatively, the reset element is provided on the at least one actuator. If the reset element is provided on an actuator, the reset element is preferably configured as a rod which is configured to get into contact with at least another actuator to transmit the reset force or the reset torque to this actuator.

The pneumatic control unit is preferably comprising a locking mechanism configured to lock the at least one actuator in at least one locking position along the total distance. This allows an operator to move the actuator into the locking position, wherein the actuator is preferably configured to supply the pneumatic pressure to the output port of the pneumatic control unit.

The at least one locking position is preferably an end position on the total distance. Additionally or alternatively, the locking mechanism is configured to release the locking of the at least one actuator if at least one release condition is met.

The at least one actuator is preferably configured as a slider. This actuator, especially the slider, is preferably configured to control at least one pneumatic pressure in at least one position on the total distance.

In an advantageous embodiment, the actuator is configured to control two pneumatic pressures, wherein in a first position on the total distance a first pressure is supplied to a first output port and in a second position on the total distance a second pressure or the first pressure is supplied to a second output port. Preferably, this first output port is connected to the raising control port of the distribution device as described above. Further preferably, this second output port is connected to the lowering control port of the distribution device.

In another advantageous embodiment, the actuator is configured to control one pneumatic pressure, wherein in one position on the total distance a pressure is supplied to the output port. Preferably, the actuator is further configured to exhaust the output port in another position on the total distance. Preferably, this output port is connected to the raising or to the lowering control port.

These pressures controlled by the actuators are preferably configured as a raising control signal and as a lowering control signal.

The pneumatic control unit is preferably comprising at least one sealing element, which is configured to interact with the at least one actuator to connect or disconnect the ports of the pneumatic control unit. The at least one sealing element is preferably configured as an O-ring. The at least one sealing element is further preferably provided on the actuator or in the housing.

Further, the total distance preferably comprises a shape of a straight line or of at least a part of a circle line.

The reset element is preferably configured as a slider.

Additionally or alternatively, the reset element is configured to be movable along at least one part of the total distance. Further preferably, the reset element is configured to be moved in parallel to the at least one actuator.

Preferably, the at least one actuator and/or the reset element are/is comprising an axle which is oriented in parallel to at least a part of the total distance.

The reset element is preferably not provided coaxially to the at least one actuator. Preferably, the reset element is provided in the middle of two actuators. Preferably, the reset element is provided in a middle of a configuration of at least two actuators. Preferably, the reset element, especially the axle of the reset element, comprises an equal distance from at least two actuators, especially from the axles of these actuators. The at least one release condition is preferably met if a force or torque acting on the at least one actuator especially along the total distance exceeds a predetermined release value.

The locking mechanism is preferably comprising a guidance extending along the total distance, and a counterpart guided by the guidance. The counterpart and the guidance are configured to be relatively movable against each other when the at least one actuator is moved along the total distance and the guidance is configured to lock the counterpart in the at least one locking position on the total distance.

The guidance is preferably comprising a tapered portion with a smaller aperture than the maximal extension of the counterpart guided in the guidance, and the tapered portion and/or the counterpart are/is configured to deform elastically, when the tapered portion and the counterpart are in contact by a force or torque which exceeds the predetermined release value.

The guidance is preferably located on the at least one actuator or in the housing, or the counterpart is preferably located on the at least one actuator or in the housing.

Preferably, the at least one actuator is configured to be moved against an elastic counterforce or countertorque while the at least one actuator is moved along at least one part of the total distance.

The elastic counterforce or countertorque is preferably generated by a spring.

Preferably, the elastic counterforce or countertorque is configured to act on the actuator in such way that the actuator is moved away from the at least one locking position.

Preferably, the reset element is provided with a resilient bias which is configured to generate the reset force or the reset torque if the reset condition is met, wherein preferably the resilient bias is configured to be released when the reset condition is met.

Preferably a pin can be provided which is configured to lock the reset element in a locked position. Further preferably, if the reset condition is met, the pin is configured to release the locking of the reset element while it is moved by the spring element. For example, the pin is configured to be moved by a force which is generated by the pneumatic confirmation pressure.

The reset force or the reset torque generated by the spring element is preferably configured to meet the release condition of the locking mechanism of the at least one actuator to unlock the at least one actuator and to reset the at least one actuator preferably to an end position.

Preferably, the pneumatic pressure controlled by the at least one actuator is a pneumatic control pressure configured to control a pneumatic device.

Preferably a component for a pneumatic system is provided comprising a pneumatic control unit as described above.

The component is preferably configured as a park and/or shunt valve, a raising/lowering valve, or another pneumatic valve.

Additionally or alternatively, the pneumatic control unit is configured to control a pneumatic control pressure to control a park and shunt valve, a raising/lowering valve, or another pneumatic valve.

Additionally or alternatively, the system is configured as an air suspension system which is preferably configured for a trailer.

Preferably, the pneumatic control unit is configured to control raising and/or lowering of a vehicle body especially of a vehicle body of a trailer. The at least one actuator is further preferably configured to be locked by the locking mechanism in a position along the total distance wherein a pneumatic pressure is supplied from the pneumatic control unit which causes raising or lowering of the vehicle body.

Preferably, a trailer air suspension system is provided comprising a pneumatic control unit according to the invention, or a component according to the invention, wherein the trailer air suspension system is preferably configured to raise and lower a vehicle body especially of a trailer in response to the pneumatic pressure controlled by the pneumatic control unit. The trailer air suspension system is preferably comprising air bellows, wherein the air suspension system is configured to control the amount of air within the air bellows to raise or lower the vehicle body. The amount of air is preferably controlled in reaction to the pneumatic control pressure controlled by the pneumatic control unit.

The embodiments and features described above can be combined with one another in any desired manner, wherein all subject matters that can be formed thereby are representing subject matters according to the invention.

Hereinafter, preferred embodiments of the invention are described by means of the attached drawings.

In detail,
- Fig. 1: shows a pneumatic air spring suspension and braking system according to the prior art,
- Fig. 2: shows a first embodiment of a cut off valve according to the present invention,
- Fig. 3a: shows a second embodiment of a cut off valve according to the present invention,
- Fig. 3b: shows a third embodiment of a cut off valve according to the present invention,
- Fig. 4a: shows a first embodiment of a pneumatic distribution device according to the present invention,
- Fig. 4b: shows a second embodiment of a pneumatic distribution device according to the present invention,
- Fig. 5: shows a third embodiment of a pneumatic distribution device according to the present invention,
- Fig. 6: shows a fourth embodiment of a pneumatic distribution device according to the present invention,
- Fig. 7: shows a first embodiment of an air spring suspension system according to the present invention,
- Fig. 8: shows a second embodiment of an air spring suspension system according to the present invention,
- Fig. 9a: shows a sectional view of a part of a pneumatic control unit according to the present invention in a released end position, wherein the pneumatic control unit comprises a locking mechanism with a counterpart and a tapered portion,
- Fig. 9b: shows a sectional view of a part of a pneumatic control unit according to Fig. 9b in a position wherein the counterpart and the tapered portion are in contact,
- Fig. 9c: shows a sectional view of the pneumatic control unit according to Fig. 9a and 9b, wherein the locking mechanism is in a locked end position,
- Fig. 10a: shows a sectional view of a pneumatic control unit according to the present invention wherein two actuators are in a locking position, and
- Fig. 10b: shows a sectional view of the pneumatic control unit according to Fig. 10a wherein the two actuators are in a released position.

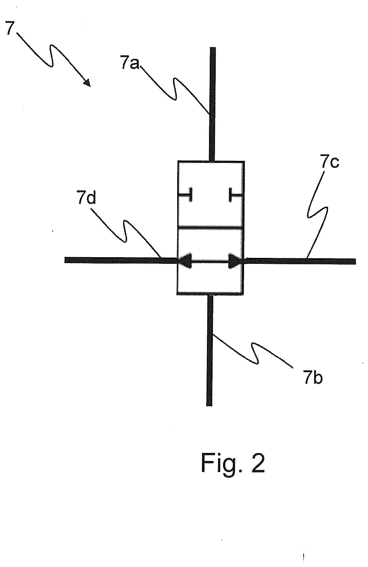

Fig. 2 shows a first embodiment of a cut off valve 7 according to the present invention.

The cut off valve 7 comprises a first control port 7a and a second control port 7b. Further, the cut off valve comprises a first port 7c and a second port 7d.

The cut off valve 7 is configured to connect the first port 7c and the second port 7d in a connection position and to disconnect the first port 7c and the second port 7d in a disconnection position.

The cut off valve 7 is further configured to move to the disconnection position in reaction to a first pneumatic control pressure supplied to the first control port 7a and to move to the connection position in reaction to a second pneumatic control pressure supplied to the second control port 7b.

The cut off valve 7 is further configured stay in the actual position when neither the first nor the second pneumatic control pressure is supplied to the first control port 7a or the second control port 7b.

In a special embodiment, the cut off valve 7 is further comprising a bistable piston (not shown) with a first side and a second side wherein the first side is configured to be pressurized by the first pneumatic control pressure and the second side is configured to be pressurized by the second pneumatic control pressure. The bistable piston is configured to convert the first and second control pressure into forces to move the cut off valve 7 into the connection or the disconnection position.

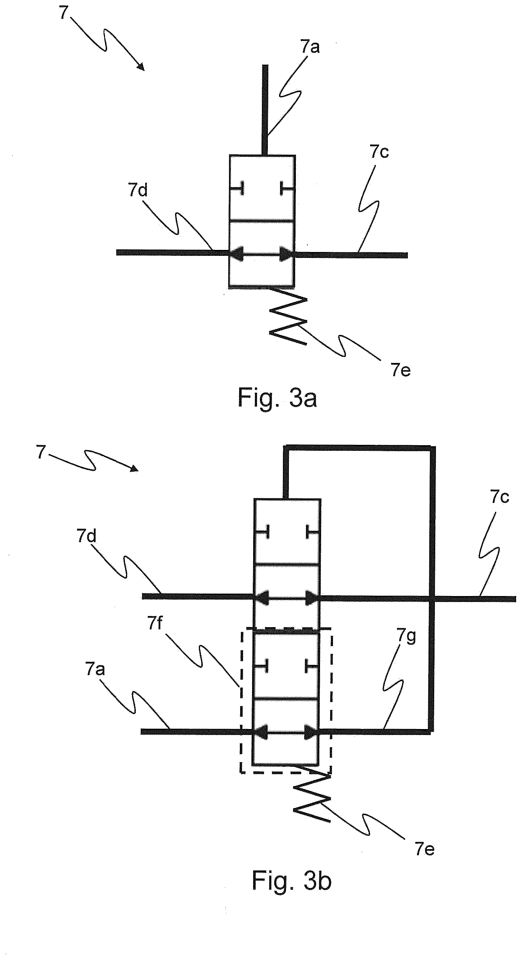

Fig. 3a shows a second embodiment of a cut off valve 7 according to the present invention. Since this embodiment essentially corresponds to the embodiment according to Fig. 2, the main differences to this embodiment are discussed below.

The cut off valve 7 comprises no second control port 7b. Instead, the cut off valve 7 comprises a spring element 7e configured to act against the first control pressure supplied to the first control port 7a.

The cut off valve 7 is configured to be switched to the disconnection position in reaction to the first control pressure and to be switched to the connection position by the spring element 7e when no first control pressure is supplied. Therefore, to keep the cut off valve 7 in the disconnection position, the first control pressure has to be supplied to the first control port 7a and to switch the cut off valve 7 to the connection position the first control pressure has to be exhausted from the first control port 7a.

Fig. 3b shows a further embodiment of the cut off valve 7 according to the present invention. Since this embodiment essentially corresponds to the embodiment according to Fig. 3a, the main differences to this embodiment are discussed below.

The first control port 7a is connected to a second cut off valve 7f which is mechanically linked to the cut off valve 7. The mechanical link can comprise e.g. a rod between the second cut off valve 7f or the cut off valve 7 or the second cut off valve 7f can be connected directly to the cut off valve 7 as shown in the drawing. The first control port 7a is connected to a control line 7g via the second cut off valve 7f. The control line 7g extends from a lower right side of the cut off valve 7 to an upper side of the cut off valve 7. The cut off valve 7 is configured to receive a first control pressure via the first control port 7a.

The second cut off valve 7f is configured to cut off the first control port 7a from the control line 7g on the left side. Therefore, the first control pressure can be stored in the control line 7g on the right side of the cut off valve 7.

The spring element 7e is further acting against the first control pressure in the same way as shown in Fig. 3a.

The function of the cut off valve 7 is as follows.

If the first control port 7a and the control line 7g are exhausted, the cut off valve 7 is in the position shown in Fig. 3b due to the spring element 7e. If a first control pressure is supplied to the first control port 7a, the control line 7g and the upper side of the cut off valve 7 are pressurized and therefore the second cut off valve 7f is moved downwards against the force of the spring element 7e. This movement causes the cut off valve 7 to switch into the disconnection position and therefore to cut off the connection between the first port 7c and the second port 7d. At the same time, the second cut off valve 7f cuts off the first control port 7a on the left side of the cut off valve 7 from the control line 7g on the right side of the cut off valve 7. Therefore, the first control pressure acting on the upper side of the cut off valve 7 is stored in the control line 7g on the right side of the cut off valve 7 and therefore the cut off valve 7 and the second cut off valve 7f are hold by the pressure against the spring element 7e in their disconnection positions.

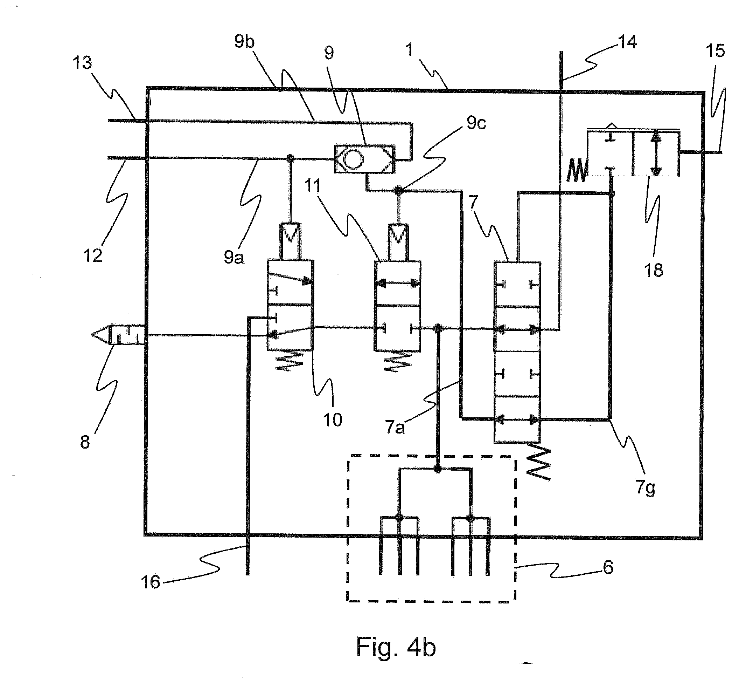

To release the cut off valve 7 to a connection position, the control line 7g on the right side of the cut off valve 7 has to be evacuated. Then, the force of the spring element 7e moves the cut off valve 7 and the second cut off valve 7f back to the connection position. A way of evacuating the control line 7g is shown in Fig. 4b.

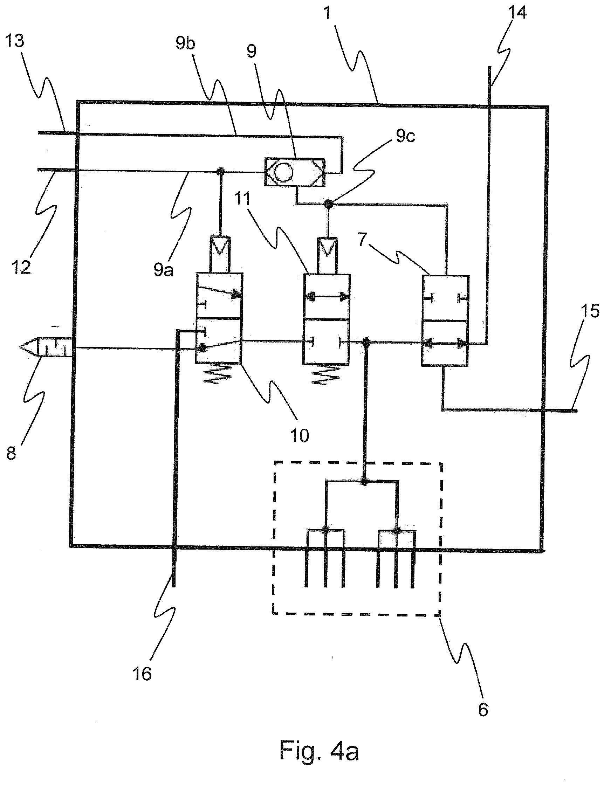

Fig. 4a shows a pneumatic distribution device 1 according to the present invention.

The distribution device 1 comprises a cut off valve 7 according to Fig. 2. For reasons of clarity, no further reference symbols are used for the cut off valve 7 and reference is made to Fig. 2 instead.

The first port 7c of the cut off valve 7 is connected to an air spring valve port 14 which is configured to be connected to an air spring valve. The second port 7d is connected to a second valve 11 of the distribution device 1 and to at least one air bellow port 6 of the distribution device 1 which is configured to be connected to at least one air bellow. The first control port 7a of the cut off valve 7 is connected to a shuttle valve line 9c which is configured to supply a first control pressure to the first control port 7a. The second control port 7b of the cut off valve 7 is connected to a RTR reset port 15 which is configured to supply a second control pressure to the second control port 7b.

Further, a raising control port 12 which is connected to a raising control line 9a of the distribution device 1 and a lowering control port 13 which is connected to a lowering control line 9b of the distribution device 1 are shown. The raising control port 12 is configured to be supplied by a raising control signal and the lowering control port 13 is configured to be supplied by a lowering control signal. Both signals can be configured as a pneumatic control pressure.

The raising control line 9a is connected to a control port of a first valve 10 and configured to supply the raising control signal to the control port of a first valve 10. The raising control line 9a is further connected to a first input port of a shuttle valve 9 and configured to supply the raising control signal to the shuttle valve 9.

The lowering control line 9b is connected to a second input port of the shuttle valve 9 and configured to supply the lowering control signal to the shuttle valve 9.

The shuttle valve 9 comprises an output port which is connected to the shuttle valve line 9c, wherein the shuttle valve 9 is configured to supply the raising control signal or the lowering control signal to the shuttle valve line 9c, wherein the raising control signal or the lowering control signal is configured to act as the first control pressure configured to be supplied to the first control port 7a of the cut off valve 7.

The shuttle valve line 9c is further connected to a control port of the second valve 11 and configured to supply the lowering control signal to the control port of the second valve 11.

The distribution device 1 comprises an outlet port 8 which is in connection to the atmosphere and which is connected to the first valve 10. The outlet port 8 is further comprising a silencer to reduce the sound of compressed air exhausting to the atmosphere.

The distribution device 1 comprises an air storage port 16 configured to be connected to at least one air storage wherein the air storage port 16 is further connected to the first valve 10.

The first valve 10 is further connected to the second valve 11 and comprises two switching positions. In a first switching position, the first valve 10 connects the second valve 11 to the outlet port 8, wherein the air storage port 16 is cut off. In a second switching position, the first valve 10 connects the air storage port 16 to the second valve 11, wherein the outlet port 8 is cut off. The first valve 10 is configured to be reset to the first switching position by a spring if no raising control signal is supplied to the control port of the first valve 10 via the raising control line 9a.

The second valve 11 comprises two switching positions. In a first switching position, the second valve 11 cuts off the first valve 10 from the at least one air bellow port 6. In a second switching position, the second valve 11 connects the first valve 10 to the at least one air bellow port 6. The second valve 11 is configured to be reset to the first switching position by a spring when no raising control signal or lowering control signal is supplied to the control port of the second valve 11 via the shuttle valve line 9c.

The combination of the first valve 10 and the second valve 11 is therefore configured to be switched into four combined switching positions which will be described as follows.

In a first combined switching position, the first valve 10 and the second valve 11 are both in the first switching positions. Therefore, the air storage port 16 is cut off from the second valve 11, wherein the at least one air bellow port 6 is cut off from the first valve 10.

In a second combined switching position, the first valve 10 is in the second switching position and the second valve 11 is in the first switching position. Therefore, the air storage port 16 is connected to the second valve 11, wherein the outlet port 8 is cut off from the second valve 11. In addition, the at least one air bellow port 6 is cut off from the first valve 10.

In a third combined switching position, the first valve 10 is in the first switching position and the second valve 11 is in the second switching position. Therefore, the air storage port 16 is cut off from the second valve 11 and the outlet port 8 is connected to the second valve 11 via the first valve 10. In addition, the at least one air bellow port 6 is connected to the first valve 10 and therefore, to the outlet port 8.

In a fourth combined switching position, the first valve 10 and the second valve 11 are both in the second switching positions. Therefore, the air storage port 16 is connected to the second valve 11 via the first valve 10 and the outlet port 8 is cut off from the second valve 11. In addition, the at least one air bellow port 6 is connected to the first valve 10 and therefore connected to the air storage port 16.

The distribution device 1 works as follows.

If a vehicle, e.g. a trailer, comprising the distribution device 1 is in motion, the raising control port 12 and the lowering control port 13 are exhausted. This has to be realized by other elements witch are not part of this embodiment of the distribution device 1. Therefore, the raising control line 9a, the lowering control line 9b and the shuttle valve line 9c are exhausted, which causes the first switching position in the first valve 10 and in the second valve 11. Therefore, the at least one air bellow port 6 is neither connected to the air storage port 16 nor to the outlet port 8.

Further, the cut off valve 7 is in the connection position as shown. Therefore, the air spring valve port 14 is connected to the at least one air bellow port 6. Because the shuttle valve line 9c is exhausted, the first control port 7a is not supplied by a first pneumatic control pressure. Further, the RTR reset port 15 is not supplied by compressed air and therefore, the second control port 7b of the cut off valve is not supplied by a second pneumatic control pressure. Therefore, the cut off valve 7 stays in the connection position.

Because the air spring valve port 14 and the at least one air bellow port 6 are connected, compressed air can be supplied via these ports through the distribution device 1 e.g. from an air spring valve which is connected to the air spring valve port 14 to e.g. at least one air bellow which is connected to the at least one air bellow port 6 and vice versa. Therefore, equalizing of the height of the vehicle body can be executed while the vehicle is moved by controlling the amount of compressed air in the at least one air bellow.

If the vehicle stands still and the vehicle body shall be raised, a raising control signal is supplied to the raising control port 12. The raising control signal is configured as a pneumatic pressure. Therefore, the raising control line 9a is supplied by the raising control signal. Further, the raising control signal is supplied to the shuttle valve 9 via the first input port of the shuttle valve 9. The shuttle valve 9 is caused to close its second input port and to supply the raising control signal to the shuttle valve line 9c via its output port.

Therefore, the raising control signal is supplied to the control ports of the first valve 10 and of the second valve 11 and to the first control port 7a of the cut off valve 7.

The raising control signal acts on the first control port 7a of the cut off valve 7 as a first pneumatic control pressure. This causes the cut off valve 7 to switch into the disconnection position and therefore the air spring valve port 14 is cut off from the at least one air bellow port 6. Now, the amount of air supplied to or from the at least one air bellow port 6 cannot longer be controlled by the connection between the air spring valve port 14. The air spring valve port 14 is now cut off from the at least one air bellow port 6.

Furthermore, the raising control signal supplied to the control port of the first valve 10 and to the control port of the second valve 11 causes the first valve 10 and the second valve 11 to switch into the second switching position. This corresponds to the fourth combined switching position, as described above, and therefore, the air storage port 16 is connected to the at least one air bellow port 6. Therefore, compressed air can now be supplied from the air storage port 16 to the at least one air bellow port 6 which causes raising of the vehicle body.

If on the other hand the vehicle stands still and the vehicle body shall be lowered, a lowering control signal is supplied to the lowering control port 13. The lowering control signal is configured as a pneumatic pressure. Therefore, the lowering control line 9b is supplied by the lowering control signal. Further, the lowering control signal is supplied to the shuttle valve 9 via the second input port of the shuttle valve 9. The shuttle valve 9 is caused to close its first input port and to supply the lowering control signal to the shuttle valve line 9c via its output port.

Therefore, the lowering control signal is supplied to the control port of the second valve 11 and to the first control port 7a of the cut off valve 7 but it is not supplied to the control port of the first valve 10.

The lowering control signal acts on the first control port 7a of the cut off valve 7 as a first pneumatic control pressure. This causes the cut off valve 7 to switch into the disconnection position and therefore the air spring valve port 14 is cut off from the at least one air bellow port 6. Now, the amount of air supplied to or from the at least one air bellow port 6 cannot longer be controlled by the connection between the air spring valve port 14 and the at least one air bellow port 6. The air spring valve port 14 is now cut off from the at least one air bellow port 6.

Furthermore, the lowering control signal supplied to the control port of the second valve 11 causes the second valve 11 to switch into the second switching position wherein the first valve 10 stays in the first switching position. This corresponds to the third combined switching position, as described above, and therefore, the at least one air bellow port 6 is connected to the outlet port 8. Therefore, compressed air can now be exhausted from the at least one air bellow port 6 to the outlet port 8 to exhaust compressed air of the at least one air bellow 6 to the atmosphere which causes lowering of the vehicle body.

If the vehicle is moved again after the vehicle body was raised or lowered, the height of the vehicle body shall be controlled by the air spring valve port 14 again. Therefore, the air spring valve port 14 has to be connected to the at least one air bellow port 6 to enable controlling of the amount of air supplied from the air spring valve port 14 to the at least one air bellow port 6 or vice versa. This function allows the vehicle to "return to ride" and is therefore called "RTR function".

The RTR function works as follows.

To start the RTR function a pneumatic control pressure is supplied to the RTR reset port 15 of the distribution device 1. This pneumatic control pressure is further supplied to the second control port 7b of the cut off valve 7 as the second pneumatic control pressure which causes the cut off valve 7 to move back into the connection position. Therefore, the air spring port 14 and the at least one air bellow port 6 are now reconnected and therefore, controlling of the amount of air supplied to the at least one air bellow port 6 from the air spring port 14 and vice versa can be executed again.

Further, no raising or lowering control signal is supplied to the raising control port 12 or to the lowering control port 13. This causes the first valve 10 and the second valve 11 to return to the first combined switching position, as described above, wherein the at least one air bellow port 6 is now cut off from the air storage port 16 and from the outlet port 8 and therefore, the amount of air supplied to or from the at least one air bellow port 6 cannot be controlled by the air storage port 16 and from the outlet port 8.

The part of the distribution device 1 which is configured to control the raising and lowering of the vehicle body is now cut off from the at least one air bellow port 6. The amount of compressed air supplied to or exhausted from the at least one air bellow port 6 can now be controlled by the air spring valve port 14 again.

**Fig. 4b** shows a second embodiment of a pneumatic distribution device 1 according to the present invention.

This embodiment essentially corresponds to the embodiment of Fig. 4a but now the cut off valve 7 as shown in Fig. 3b is provided in the distribution device 1 instead of the cut off valve 7 shown in Fig. 2. Therefore, only the differences to the embodiment shown in Fig. 4a are described below and reference is made to Fig. 2, 3b and Fig. 4a.

The first port 7c of the cut off valve 7 is connected to the air spring valve port 14 and the second port 7d of the cut off valve 7 is connected to the second valve 11.

The first control port 7a of the cut off valve 7 is connected to the shuttle valve line 9c.

The control line 7g is connected to a RTR valve 18 which is provided within the distribution device 1. The RTR valve 18 is further comprising an exhaust port and a control port. The control port is connected to the RTR reset port 15 of the distribution device 1. Further, the RTR valve 18 is comprising a spring element which is configured to switch the RTR valve 18 into a first switching position, wherein the control line 7g and the exhaust port of the RTR valve 18 are cut off from each other. If a control pressure is supplied to the RTR reset port 15, the RTR valve 18 switches into a second switching position wherein the control line 7g is connected to the exhaust port of the RTR valve 18.

In the following, only the working of the cut off valve 7 and of the RTR valve 18 shall be described. The working of the remaining parts of the distribution device 1 is the same as described in Fig. 4a.

If a raising signal is supplied to the raising control port 12 or a lowering signal is supplied to the lowering control port 13 as described according to Fig. 4a, the shuttle valve line 9c is supplied with compressed air via the shuttle valve 9.

Therefore, the first control port 7a of the cut off valve is supplied with the compressed air from the shuttle valve line 9c and therefore the control line 7g is supplied with the compressed air via the second cut off valve 7f.

The compressed air in the control line 7g acting on the upper side of the cut off valve 7 causes the cut off valve 7 to switch into a disconnection position wherein the first port 7c and the second port 7d are cut off from each other. Therefore, the air spring valve port 14 is cut off from the at least one air bellow port 6.

At the same time, the cut off valve 7f cuts off the connection between the first control port 7a and the control line 7g. Therefore, compressed air is now stored within the control line 7g because the RTR valve 18 is in its first switching position as described above.

If a connection between the air spring valve port 14 and the at least one air bellow port 6 shall be re-established, the cut off valve 7 has to be reset to a connection position, wherein the first port 7c and the second port 7d are connected to each other.

Therefore, the control line 7g has to be exhausted. The exhausting of the control line 7g is realized by the RTR valve 18. In reaction of the receiving of a pneumatic control pressure via the RTR reset port 15, the RTR valve 18 connects the control line 7g to the exhaust port of the RTR valve 18 and therefore the control line 7g is exhausted. Therefore, compressed air is no longer acting on the upper side of the cut off valve 7 and therefore the spring element 7e of the cut off valve 7 moves the cut off valve 7 and the second cut off valve 7f into the connection position. In the connection position the first control port 7a is again connected to the control line 7g via the second cut off valve 7f. Further, the first port 7c of the cut of valve 7 is connected to the second port 7d of the cut of valve again and therefore the air spring valve port 14 is connected to the at least one air bellow port 6 again.

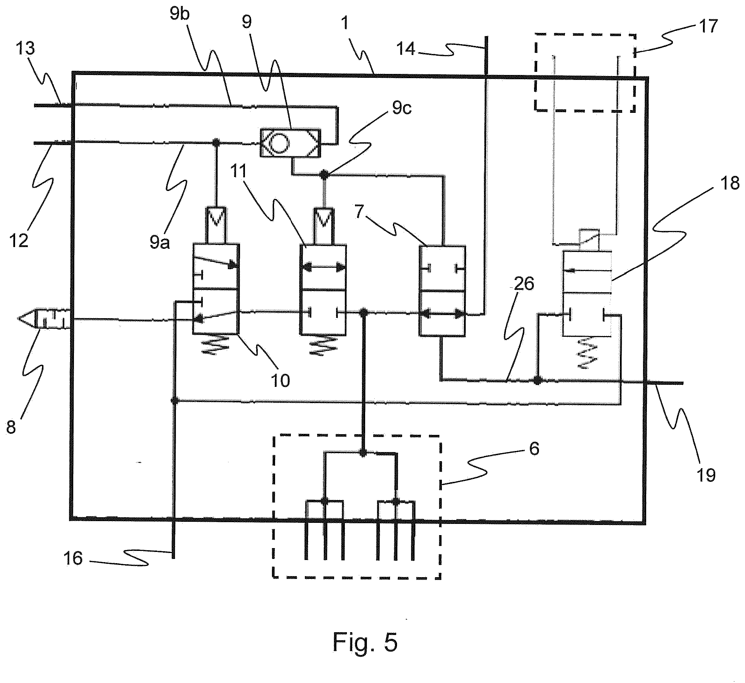

**Fig.** 5 shows a third embodiment of a pneumatic distribution device 1 according to the present invention. This embodiment essentially corresponds to the embodiment of Fig. 4a. Therefore, only the differences are described below and reference is also made to Fig. 2 and Fig. 4a.

The distribution device 1 does not comprise a RTR reset port 15 as shown in Fig. 4a. Instead, it comprises a RTR line 26 which is connected to the second control port 7b of the cut off valve 7 and which is further connected to a RTR output port 19, which is configured to supply a RTR confirmation signal to other devices.

Furthermore, the distribution device 1 comprises a RTR valve 18 which is connected to the air storage port 16 and to the RTR line 26. The RTR valve 18 is configured to disconnect the RTR line 26 from the air storage port 16 in a first switching position and to connect the RTR line 26 to the air storage port 16 in a second switching position. Further, the RTR valve 18 is configured to be reset to the first switching position by a spring if no RTR confirmation signal is supplied to the RTR valve 18. The RTR valve 18 shown in Fig. 5 is further configured to receive an electrical confirmation signal which can be received by an electric actuation 17. The electric actuation 17 comprises two electric contacts which are configured to be put under voltage. The RTR valve 18 is configured to switch into its second switching position in reaction to the RTR confirmation signal received by the electric actuation 17.

In another embodiment of this distribution device 1 (not shown), the RTR valve 18 is configured to be actuated pneumatically, wherein it comprises the same switching positions as described above. In this case, the distribution device 1 comprises a RTR reset port 15 configured to receive a pneumatic RTR confirmation signal, wherein the RTR valve 18 is connected to the RTR reset port 15 and configured to switch into the second switching position if a pneumatic RTR confirmation signal is supplied to the RTR reset port 15.

The RTR function of the shown embodiment works as follows.

If an RTR confirmation signal, which is e.g. generated because a speed of the vehicle is higher than a predetermined value, is sent to the electric actuation 17, the RTR valve 18 switches to its second switching position, whereby the RTR line 26 is connected to the air storage port 16. Therefore compressed air is supplied from the air storage port 16 via the RTR valve 18 to the RTR line 26. The compressed air is thereby supplied to the second control port 7b of the cut off valve 7, wherein the compressed air acts as the second pneumatic control pressure. This causes the cut off valve 7 to return in its connection position whereby the connection between the air spring valve port 14 and the at least one air bellow port 6 is re-established.

Further, compressed air is supplied from the RTR line 26 to the RTR output port 19. This allows to supply compressed air to further devices in order to trigger other RTR functions, e.g. the reset of raising and lowering actuators.

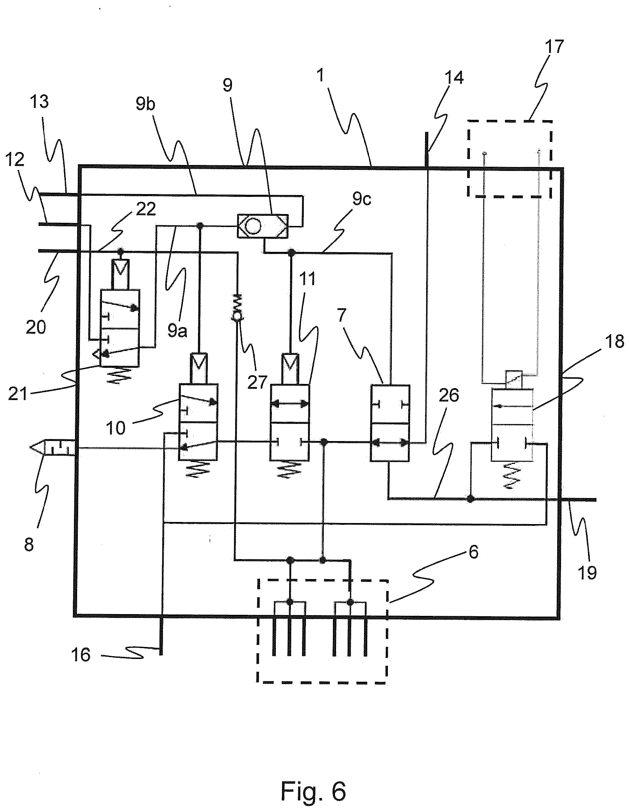

Fig. 6 shows a fourth embodiment of a pneumatic distribution device 1 according to the present invention. Since this embodiment essentially corresponds to the embodiment of Fig. 5, only the differences are described below and reference is further made to Fig. 2, Fig. 4a and Fig. 5.

The distribution device 1 comprises a raising limitation valve 21 comprising a control port which is connected to a raising limitation line 22. The raising limitation line 22 is connected to a raising limitation port 20 and to the at least one air bellow port 6. Further, the raising limitation line 22 is connected via a check valve 27 which is configured to block a flow of compressed air from the raising control port 20 to the at least one air bellow port 6.

The raising limitation valve 21 is connected to the raising control port 12 and to the raising control line 9a. Further, the raising limitation valve 21 is configured to connect the raising control port 12 to the raising control line 9a in a first switching position and to cut off the control port 12 from the raising control line 9a and to exhaust the raising control line 9a e.g. to the atmosphere in a second switching position.

Further, the raising limitation valve 21 is configured to be reset to the second switching position by a reset spring element if no control pressure is supplied to the raising limitation line 22.

The raising limitation valve 21 works as follows.

If a control pressure is supplied to the raising control port 20, the raising limitation valve 21 is in its first switching position, as described above. Therefore a raising control signal supplied to the raising control port is further supplied to the raising control line 9a, whereby the distribution device 1 reacts in the same way as the distribution device 1 shown in Fig. 5.

If no control pressure is supplied to the raising control port 20, the raising limitation valve 21 is switched into its second switching position, as described above, by its reset spring element. Therefore, the raising control signal cannot be supplied from the raising control port 12 to the raising control line 9a anymore. Instead, the raising control line 9a is exhausted via the raising limitation valve 21 and therefore, the shuttle valve line 9c is also exhausted via the shuttle valve 9 and the raising control line 9a. Therefore, the control ports of the first valve 10 and of the second valve 11 are exhausted and in addition, the first control port 7a of the cut off valve 7 is also exhausted. This causes the first valve 10 and the second valve 11 to return to the first combined switching position, as described above, and therefore, the supplying of compressed air from the air storage port 16 to the at least one air bellow port 6 is no longer possible.

Since the cut off valve 7 is configured to stay in the actual switching position, the cut off valve 7 stays in the disconnection position and therefore, the air spring valve port 14 stays cut off from the at least one air bellow port 6. Therefore, compressed air cannot flow back from the at least one air bellow port 6 through the distribution device 1 neither via the outlet port 8 nor via the air spring valve port 14.

The distribution devices 1 shown in Figures 5 and 6 are comprising a RTR output port 19 which is configured to supply a RTR confirmation signal to other devices, e.g. actuators. According to the invention, there can be distribution devices 1 as shown in the Figures 5 and 6 which do not comprise such a RTR output port 19.

Further, the distribution devices 1 shown in the Figures 4a and 4b can comprise such a RTR output port 19. In this case, the pneumatic control pressure received by the RTR reset port 15 can be configured as a pilot pressure with a lower air flow whereas other devices might require higher air flow for the respective RTR application which is then supplied from the supply port 16 via the distribution device to output port 19.

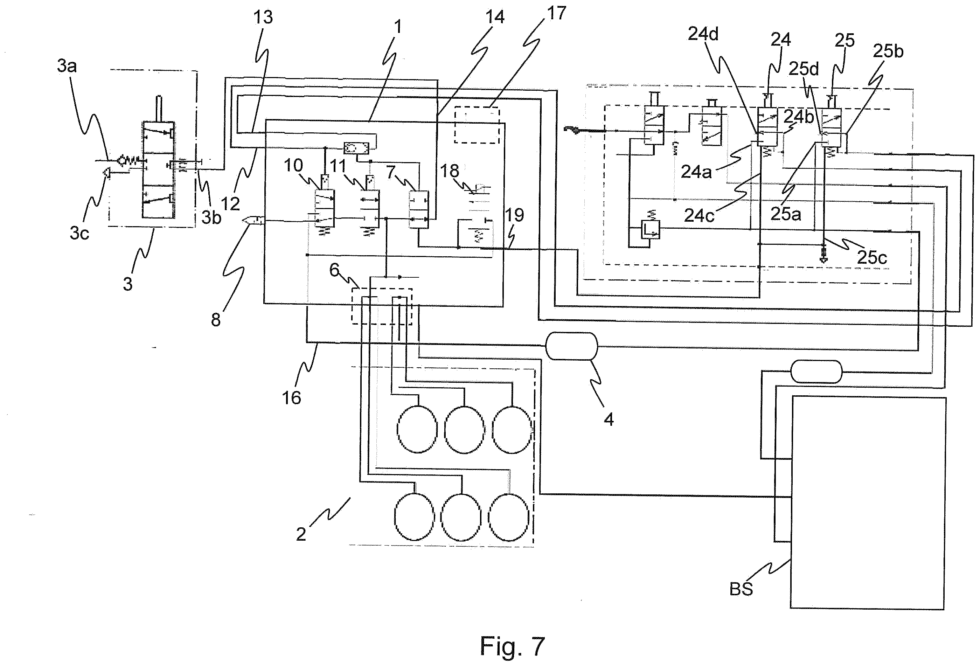

Fig. 7 shows a first embodiment of an air spring suspension system according to the present invention.

The air spring suspension system comprises a distribution device 1 essentially according to Fig. 5. For reasons of clarity, not every element is marked by reference signs in this drawing. Therefore, reference is also made to Fig. 2, 4a and Fig. 5 below.

The distribution device 1 is connected via its air spring valve port 14 to a connection port 3b of an air spring valve 3. The air spring valve 3 comprises an air supply port 3a which is connected to an air storage (not shown). Further, the air spring valve 3 comprises an outlet port 3c which is connected to the atmosphere.

The air spring valve 3 comprises three switching positions. In a first switching position, the air supply port 3a is connected to the connection port 3b. Therefore, compressed air can be supplied from the air supply port 3a via the connection port 3b to the air spring valve port 14 of the distribution device 1.

In a second switching position, the connection port 3b is cut off from the air supply port 3a and from the outlet port 3c of the air spring valve 3. Therefore, compressed air cannot be supplied from the air supply port 3a via the connection port 3b to the air spring valve port 14 of the distribution device 1. Further, compressed air cannot be supplied from the air spring valve port 14 via the connection port 3b to the outlet port 3c.

In a third switching position, the connection port 3b is connected to the outlet port 3c of the air spring valve 3. Therefore, compressed air can be supplied from the air spring valve port 14 via the connection port 3b to the outlet port 3c of the air spring valve 3.

The air spring valve 3 further comprises a lever actuation comprising a lever connected to a vehicle body (not shown). The lever is configured to switch the air spring valve 3 into one of its three switching positions, as described above. If the vehicle body moves upward from an initial height which is the height of the vehicle body while the vehicle moves, the lever switches the air spring valve 3 to the third switching position. If the vehicle body moves downward from the initial height, the lever switches the air spring valve 3 to the first switching position. If the vehicle body is moved to the initial height, the lever switches the air spring valve 3 to the second switching position.

The distribution device 1 is connected to an air storage 4 via the air storage port 16 and further connected to at least one air bellow 2 via the at least one air bellow port 6.

The RTR output port 19 of the distribution device 1 is connected to a reset port 24c of a raising actuator 24 and to a reset port 25c of a lowering actuator 25.

The raising actuator 24 comprises a first port 24a connected to the air storage 4 and a second port 24b connected to the raising control port 12 of the distribution device 1. Further, the raising actuator 24 comprises an outlet port 24d which is connected to the atmosphere. The raising actuator 24 is configured to be manually actuated and comprises a valve with two switching positions.

In a first switching position, the second port 24b is connected to the outlet port 24d and therefore, the raising control port 12 is connected to the atmosphere via the second port 24b and via the outlet port 24d of the raising actuator 24.

In a second switching position, the second port 24b is connected to the first port 24a and therefore the air storage 4 is connected to the raising control port 12 via the first port 24a and via the second port 24b of the raising actuator 24.

The lowering actuator 25 comprises a first port 25a connected to the air storage 4 and a second port 25b connected to the lowering control port 13 of the distribution device 1. Further, the lowering actuator 25 comprises an outlet port 25d which is connected to the atmosphere. The lowering actuator 25 is configured to be manually actuated and comprises a valve with two switching positions.

In a first switching position, the second port 25b is connected to the outlet port 25d and therefore, the lowering control port 13 is connected to the atmosphere via the second port 25b and via the outlet port 25d of the lowering actuator 25.

In a second switching position, the second port 25b is connected to the first port 25a and therefore the air storage 4 is connected to the lowering control port 13 via the first port 25a and via the second port 25b of the lowering actuator 25.

Further, the raising actuator 24 and the lowering actuator 25 are configured to be reset to their first switching position by a spring element.

In addition, the raising actuator 24 and the lowering actuator 25 comprise a locking mechanism (not shown) configured to lock the raising actuator 24 and the lowering actuator 25 in their second switching positions. Each locking mechanism is configured to be unlocked if a pneumatic pressure, e.g. a RTR confirmation signal, is supplied to the reset port 24c or to the reset port 25c.

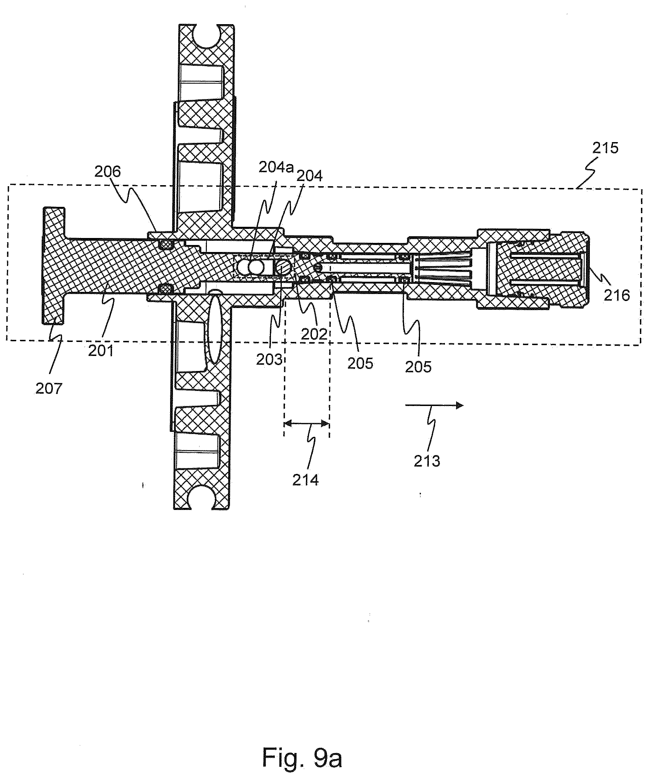

A further embodiment of these actuators 24, 25 is shown by the Figures 9a to 10b.

The air spring suspension system shown in Fig. 7 is further connected to a brake control system BS of the vehicle. Actuators for parking and shunting are shown on the left side of the actuators 24, 25. In this embodiment, the actuators for parking and shunting and the actuators 24, 25 are provided within the same device. In another embodiment these actuators can also be provided separately.

Further, the distribution device 1 comprises a connection to the brake control system BS. This connection is only optional.

The air spring suspension system works as follows.

If neither the raising actuator 24 nor the lowering actuator 25 are switched into their second switching position, no compressed air is supplied to the raising control port 12 or to the lowering control port 13. Therefore, according to Fig. 5, the air spring valve port 14 and the at least one air bellow port 6 are connected to each other via the cut off valve 7.

In this configuration the amount of air in the at least one air bellow 2 can be controlled by the air spring valve 3. If the vehicle body raises over the initial height, the air spring valve 3 switches into its third switching position, as described above, whereby compressed air from the at least one air bellow 2 is exhausted to the atmosphere via the at least one air bellow port 6, the air spring valve port 14, the connection port 3b and the outlet port 3c. The vehicle body is therefore lowered.

If the vehicle body lowers under the initial height, the air spring valve 3 switches into its first switching position, as described above, whereby compressed air from the air supply port 3a is supplied to the at least one air bellow 2 via the connection port 3b, the air spring valve port 14 and the at least one air bellow port 6. The vehicle body is therefore raised.

If the height of the vehicle body corresponds to the initial height, the air spring valve 3 switches into its second switching position, as described above, whereby the connection port 3b is cut off from the air spring valve port 14 and therefore, the compressed air is stored in the at least one air bellow 2. The height of the vehicle body is therefore kept.

This essentially describes how the air suspension works while the vehicle is moving. If the vehicle stands still the vehicle body can be raised or lowered as described as follows.

For raising the vehicle body, the raising actuator 24 is manually actuated, whereby it is moved to its second switching position, as described above. Therefore, compressed air from the air storage 4 is supplied via the first port 24a and the second port 24b to the raising control port 12, wherein the compressed air is acting as a raising control signal.

This causes the distribution device 1 to cut off the connection between the air spring valve port 14 and the at least one air bellow port 6, as described above. Therefore, the height of the vehicle body can no longer be controlled by the air spring valve 3. Instead, compressed air from the air storage 4 is now supplied via the air storage port 16 and via the at least one air bellow port 6 to the at least one air bellow 2.

This causes a rise of the amount of air in the at least one air bellow 2. The vehicle body is raised.

If the raising actuator 24 is switched back to its first switching position, no more compressed air is supplied to the raising control port 12 and therefore, no raising control signal is supplied. This causes the first valve 10 to switch into its first switching position whereby the air storage 4 is cut off from the at least one air bellow 2. However, since the cut off valve 7 is configured to stay in its actual position until its second control port 7b is supplied by a pneumatic control pressure, the air spring valve 3 stays cut off from the at least one air bellow 2. Therefore, the amount of compressed air in the at least one air bellow 2 cannot be exhausted and therefore, an actual height of the vehicle body is kept.

Thus, any height of the vehicle body between the initial height and a maximum height can be adjusted.

For lowering the vehicle body, the lowering actuator 25 is manually actuated, whereby it is moved to its second switching position, as described above. Therefore, compressed air from the air storage 4 is supplied via the first port 25a and the second port 25b to the lowering control port 13, wherein the compressed air is acting as a lowering control signal.

This causes the distribution device 1 to cut off the connection between the air spring valve port 14 and the at least one air bellow port 6, as described above. Therefore, the height of the vehicle body can no longer be controlled by the air spring valve 3. Instead, compressed air from the at least one air bellow 2 now supplied via the at least one air bellow port 6 and via the outlet port 8 to the atmosphere.

This causes a reduction of the amount of air in the at least one air bellow 2. The vehicle body is lowered.

If the lowering actuator 25 is switched back to its first switching position, no more compressed air is supplied to the lowering control port 13 and therefore, no lowering control signal is supplied. This causes the second valve 11 to switch into its first switching position whereby the at least one air bellow 2 is cut off from the outlet port 8. However, since the cut off valve 7 is configured to stay in its actual position until its second control port 7b is supplied by a pneumatic control pressure, the air spring valve 3 stays cut off from the at least one air bellow 2. Therefore, the amount of compressed air in the at least one air bellow 2 cannot be exhausted and therefore, an actual height of the vehicle body is kept.

Thus, any height of the vehicle body between the initial height and a minimum height can be adjusted.

If the vehicle is moved again, an electrical RTR, e.g. generated by an electric control device, signal is sent to the electric actuation 17. This causes the RTR valve 18 to switch into its second switching position, as described above. Therefore, the air storage port 16 is connected to the RTR line 26 and further to the second control port 7b of the cut off valve 7. Compressed air can now be supplied from the air storage 4 to the second control port 7b of the cut off valve 7, which causes the cut off valve 7 to switch into its connection position. Therefore, the air spring valve port 14 is reconnected to the at least one air bellow port 6 and therefore, the amount of air in the at least one air bellow 2 can be controlled again by the air spring valve 3.

Further compressed air is supplied from the air storage 4 via the air storage port 16, the RTR valve 18 and the RTR line 26 to the RTR output port 19. Therefore, this compressed air is further supplied to the reset ports 24c, 25c of the raising actuator 24 and of the lowering actuator 25 which causes them to switch back to their first switching position. Therefore, no compressed air is neither supplied to the raising control port 12 nor to the lowering control port 13 and therefore, the distribution device is reset to a driving configuration.

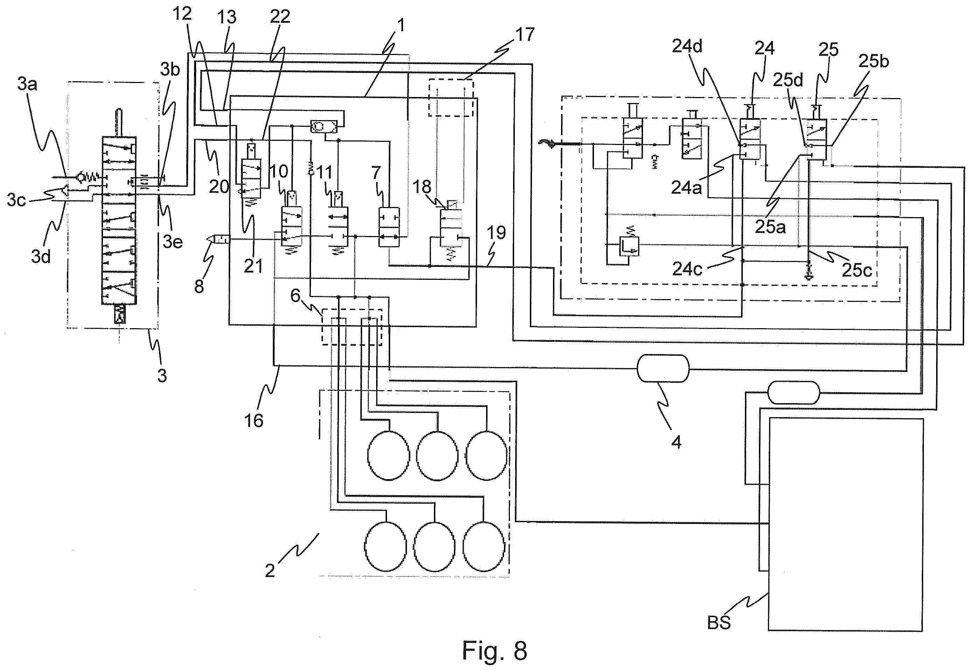

**Fig.** 8 shows a second embodiment of an air spring suspension system according to the present invention.

The air spring suspension system comprises a distribution device 1 essentially according to Fig. 6. For reasons of clarity, not every element is marked by reference signs in this drawing. Therefore, reference is also made to Fig. 2, 4a, 5 and Fig. 6 below.

An air spring valve 3 is shown which essentially corresponds to the air spring valve 3 of Fig. 7.

In addition, the air spring valve shown in Fig. 8 comprises a first confirmation port 3d and a second confirmation port 3e. The first confirmation port 3d is configured to be supplied by a pneumatic confirmation pressure wherein the second confirmation port 3e is connected to the raising limitation port 20 of the distribution device 1.

The air spring valve 3 comprises the same switching positions as the air spring valve 3 shown in Fig. 7, wherein the first confirmation port 3d and the second confirmation port 3e are connected in every of these three switching positions.

In addition, the air spring valve 3 comprises a fourth switching position wherein the connection port 3b is connected to the outlet port 3c and the first confirmation port 3d is cut off from the second confirmation port 3e. The air spring valve 3 is configured to switch to the forth switching position if a maximum height of the vehicle body is reached. In this switching position, the raising limitation port 20 is no longer supplied with the pneumatic confirmation pressure.

Further, the air spring valve 3 comprises a fifth switching position wherein the connection port 3b and the second confirmation port 3e are connected to the outlet port 3c. Therefore, the raising limitation line 22 is connected via the raising limitation port 20 and via the second confirmation port 3e to the outlet port 3c.

The fourth switching position of the air spring valve 3 works as a raising limitation switching position and works as follows.

If the height of the vehicle body is below its maximum height, the pneumatic confirmation pressure is supplied from the air spring valve 3 to the raising limitation port 20. Therefore the raising limitation valve 21 is switched and kept in its first switching position, as described above, wherein the raising control port 12 and the raising control line 9a are connected to each other. A raising control signal can always be supplied from the raising control port 12 via the raising limitation valve 21 to the raising control line 9a.

If the vehicle body reaches its maximum height, e.g. because it is raised in reaction to a raising control signal, the air spring valve 3 switches to the fourth switching position. In this position the raising limitation port 20 is no longer supplied with the pneumatic confirmation pressure. This causes the raising limitation valve 21 to be switched by its spring element to its second switching position, whereby it cuts off the connection between the raising control port 12 and the raising control line 9a. Therefore, a raising control signal cannot be supplied from the raising control port 12 to the raising control line 9a anymore. Further, because the cut off valve 7 is kept in its disconnection position, as described above, the compressed air in the at least one air bellow 2 is kept there.

Therefore, the vehicle body is kept in the maximum height.

The fifth switching position of the air spring valve 3 works as a protection switching position for the at least one air bellow 2 and works as follows.

If the vehicle body is in its maximum height or near its maximum height and in addition loaded, e.g. with gravel, and the vehicle starts to unload the gravel by tilting the vehicle body, the whole gravel slides from the vehicle body in a in a relatively short time. Therefore, the load acting on the vehicle body is reduced in an abrupt manner which causes the at least one bellow to expand. This can cause damage at the at least one air bellows 2. To avoid this scenario, the air spring valve 3 switches into the fifth switching position when the height of vehicle body overruns the maximum height.

In this switching position, the raising limitation line 22 which is connected to the at least one air bellow port 6 and therefore to the at least one air bellow 2, is now connected via the raising limitation port 20 and the second confirmation port 3e to the outlet port 3c. Therefore, the at least one air bellow 2 can exhaust an amount of air via this connection and against the check valve 27 to the atmosphere until the vehicle body is lowered to the maximum height and the air spring valve switches to the fourth switching position.

The actuators 24, 25 shown in the Figures 7 and 8 can be configured to be locked in a locking position and/or can be configured to be reset automatically. Further, they can be provided in a pneumatic control unit 215 which is configured to generate a pneumatic control signal for raising and lowering. Therefore, the pneumatic control unit 215 is configured to be connected to the raising control port 12 and to the lowering control port 13 of one of the shown distribution devices 1 to supply the pneumatic control signal. Examples for a realisation of these functionalities are given by the following Figures.

Fig. 9a shows a sectional view of a part of a pneumatic control unit 215 in a released end position.

An actuator 201 is shown which is configured as a slider and provided slideable in a housing 206. The actuator 201 can be manually moved parallel to the shown direction 213 along a total distance 214 by a button 207 wherefore an operator can apply a force parallel to the direction 213 on the actuator 201.

The actuator 201 further comprises sealing elements 205 which are in contact to the housing 206 and configured to control a pneumatic pressure according to the position of the actuator 201 on the total distance 214. The actuator 201 is further configured to control a supply of a pneumatic pressure to an output port 216 which is configured to be connected to other pneumatic devices (not shown). For example, the output port 216 is configured to be connected or connected to the raising control port 12 or to the lowering control port 13.

The actuator 201 comprises a locking mechanism 202 which is marked up by a dotted frame. The locking mechanism 202 is configured to lock the actuator 201 in an end position. The locking mechanism 202 comprises a guidance 204 configured as a long hole extending along the total distance 214. The guidance 204 is located on the actuator 201. Further, the locking mechanism 202 comprises a counterpart 203 which is located in the housing 206 and which is configured as a pin which is guided in the guidance 204. The guidance 204 and the counterpart 203 are configured to be relatively movable to each other. Thereby, the extension dimension of the guidance parallel to the direction 213 defines the total distance 214 because if the counterpart 203 is in contact with the left or right end of the guidance 204, the actuator 201 can only be moved back so that the counterpart 203 and the end of the guidance 204 separate from each other again.

The guidance 204 is further provided with a tapered portion 204a. The tapered portion 204a comprises an aperture transverse to the direction 213 which is smaller than the maximum diameter of the counterpart 203. Further the tapered portion 204a is configured to deform elastically to increase the size of its aperture so that the counterpart 203 can be moved through the aperture.

The tapered portion 204a and the counterpart 203 have to be in contact under a force acting in parallel to the direction 213. The value of the force which is needed to deform the tapered portion 204a defines a release condition. If the release condition is met the locking of the locking mechanism 202 is released and the actuator can be moved parallel to the direction 213.

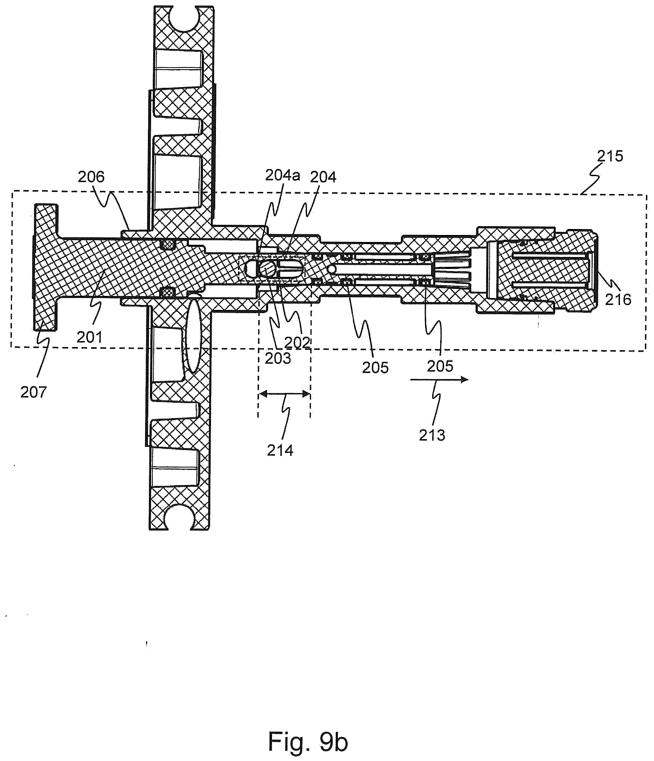

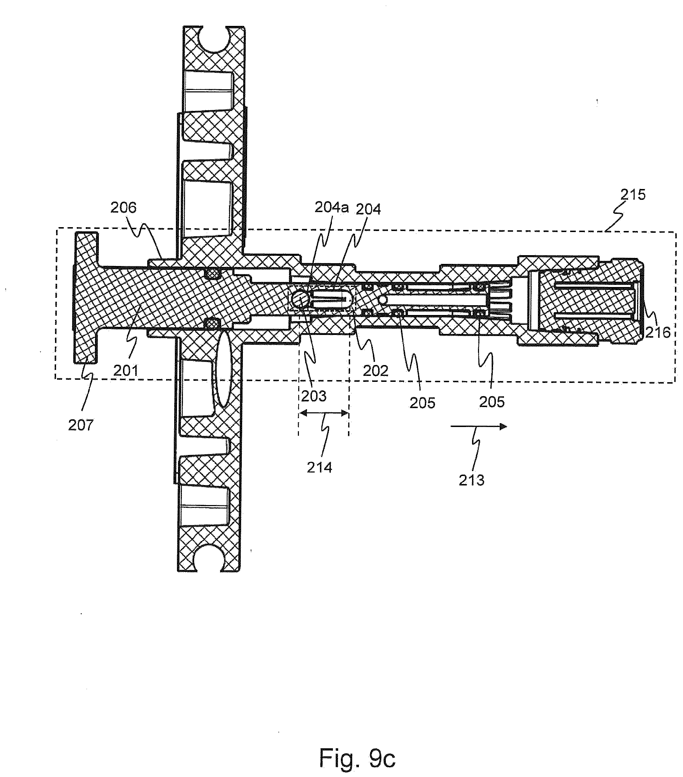

The working of the locking mechanism is described below. Therefore, in addition to Fig. 9a, reference is made to Fig. 9b and Fig. 9c.

Fig. 9b shows a sectional view of a part of the pneumatic control unit 215 according to Fig. 9a in a position wherein the counterpart 203 and the tapered portion 204a are in contact.

Fig. 9c shows a sectional view of the part of a pneumatic control unit 215 according to Fig. 9a and 9b in a locked end position.

If the actuator 201 is moved by an operator along the direction 213, whereby the counterpart 203 and the tapered portion 204a get into contact, as shown in Fig. 9b, the operator has to apply a force by pressing the button 207 into the direction 213. The force applied on the button 207 has to be higher than a predetermined release value. Since, the tapered portion 204a configured to be deformable elastically, as described above, the predetermined release value is essentially defined by the stiffness of the guidance, especially of the tapered portion 204a. Further, it is defined by the geometry of the tapered portion 204a and of the counterpart 203.

The counterpart 203 acting on the tapered portion 204a by the force of the operator causes the tapered portion 204a to increase the size of its aperture so that the counterpart 203 can be relatively moved with respect to the guidance 204.

Finally, the counterpart 203 has reached a left end position on the total distance 214 within the guidance, as shown in Fig. 9c.

The counterpart 203 is now located on a left side of the tapered portion 204a in an end position and abutting against the end of the guidance 204. Therefore, the counterpart 203 cannot move to the left with respect to the guidance 204 and if no force comprising a value higher than the predetermined release value is acting on the actuator 201 contrary to the direction 213, the counterpart 203 can also not move to the right with respect to the guidance 204.

Therefore, the locking mechanism 202 is in a locked state and the actuator 201 is in a locking position.

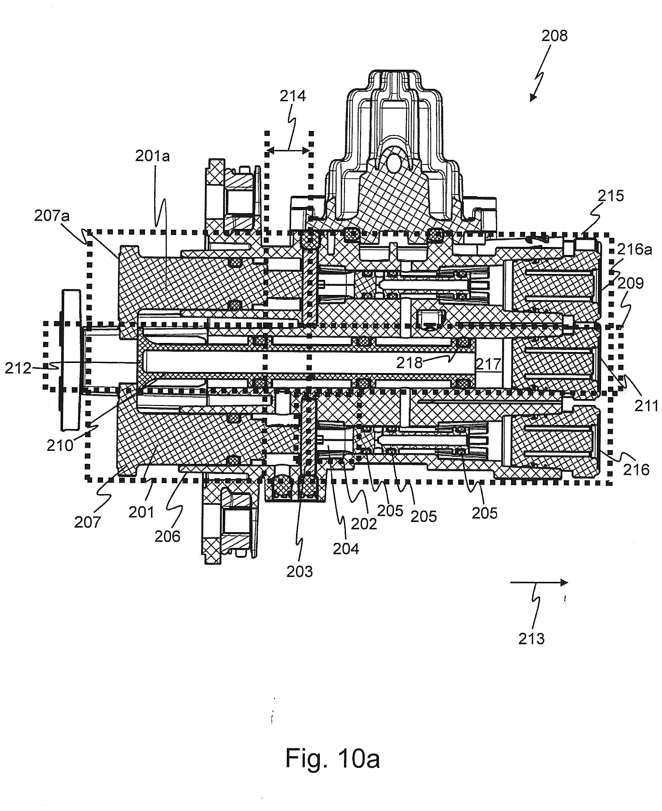

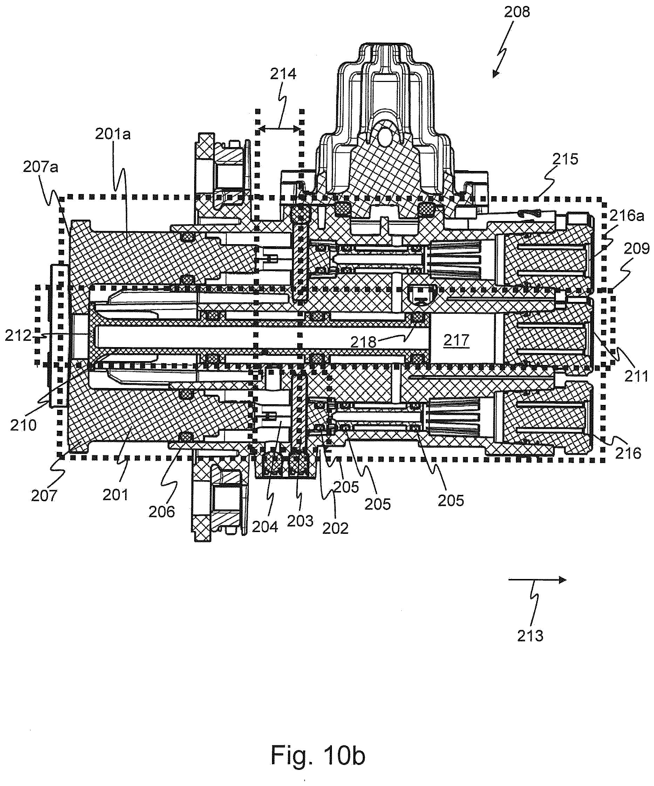

Next, a pneumatic control unit according to the present invention will be described with respect to Fig. 10a and Fig. 10b.

**Fig. 10a** shows a sectional view of a pneumatic control unit 215 according to the present invention wherein two actuators 201, 201a are in a locking position and **Fig. 10b** shows a sectional view of the pneumatic control unit 215 according to Fig. 10a wherein the actuators 201, 201a are in a released position. The actuators 201, 201a shown in the Figures 9a to 10b can be configured as the actuators 24, 25 shown in the Figures 7 and 8.

The pneumatic control unit 215 is marked up by a dotted frame and provided in a housing 206 of a park and shunt valve 208 for a pneumatic brake control system of a trailer.

Further, the control unit 215 comprises two actuators 201, 201a which correspond to the actuator 201 shown in the Figures 9a to 9c but which are shown rotated about 90° around the direction 213. For a detailed description of these actuators 201, 201a, reference is therefore made to Figures 9a to 9c.

Both actuators 201, 201a are configured to be manually operated by an operator applying a force to the buttons 207, 207a and are each comprising an output port 216, 216a configured to be connected or connected to a pneumatic device, e.g. to a raising and lowering valve (not shown) of the trailer. Especially, the output ports 216, 216a are configured to be connected to the raising control port 12 and to the lowering control port 13 of a pneumatic distribution device 1 as described above. By the output ports 216, 216a a pneumatic control pressure can be supplied to the raising and lowering valve, to trigger raising or lowering of a vehicle body of the trailer. For example, the lower actuator 201 is configured to supply the pneumatic control pressure which is configured to trigger the lowering and the upper actuator, the second actuator 201a, is configured to supply the pneumatic control pressure which is configured to trigger the raising of the vehicle body of the trailer.

Both actuators 201, 201a are configured to be moved parallel to the direction 213 over a total distance 214 which is defined according to the total distance 214 as shown in Fig. 9a to Fig. 9c.

The pneumatic control unit 215 further comprises a reset mechanism 209 which is marked up by a dotted frame in the drawings. The reset mechanism 209 is comprising a reset element 210 configured as a slider which is provided movable parallel to the direction 213. The reset element 210 further comprises a contact portion 212 provided on a left end of the reset element 210. The reset portion 212 is configured to abut to the button 207 and to the button 207a, if the reset element 210 is moved against the direction 213.

Further, the reset element 210 is configured to be moved in reaction to a pneumatic pressure which can be supplied to a reset port 211 of the reset mechanism 209. If the reset element 210 is not in the left end position and a pneumatic pressure is supplied to the reset port 211, the reset element 210 is configured to move to the left, especially to the left end position. Therefore, the reset port 211 is connected to a chamber 217 located on a right end of the reset element 210, wherein the reset element 210 is configured to seal the chamber 217 by its right end and by a sealing element 218 located on the reset element 210 and which is in contact to the housing 206. The pneumatic pressure supplied to the chamber 217, therefore generates a force acting on the right end of the reset element 210. The pneumatic pressure supplied to the reset port 211 therefore acts as a pneumatic conformation pressure.

The reset port 211 is configured to be connected or connected to a RTR output port of the distribution device, e.g. as shown in Fig. 5 or 6.

Since the actuators 201, 201a are configured to be locked in their locking position by the locking mechanism 202, the reset element 210 is configured to release the locking and to move the actuators 201, 201a from the locking position to an end position. Therefore, the reset element 210 is configured to generate a force which corresponds at least to the predetermined release value. This force is applied to the actuator 201, to the second actuator 201a or to both actuators 201, 201a when the reset element 210 is moved to the left and the contact portion 212 abuts to a right side of the button 207, of the button 207a or of both buttons 207, 207a.

The reset function of the pneumatic control unit 215 works as follows. For simplification, the reset function is only described with reference to the lower actuator 207. The upper actuator 207a is reset in the same way.

If an operator has pressed the button 207 and has moved the actuator 201 into the locking position as shown in Fig. 10a, the right side of the button 207 abuts to the contact portion 212 of the reset element 210 and a pneumatic pressure is supplied via the port 216 to other devices of the system.

If the actuator 201 shall be reset, a pneumatic pressure has to be supplied to the reset port 211 wherein a force is generated in the chamber 217 acting on the right end of the reset element 210. If this force exceeds the predetermined release value, the reset element 210 abutting to the right side of the button 207 by the contact portion 212, moves to the left and therefore moves the actuator 201 out of the locking position.

Therefore, the reset element 210 is configured to reset the actuator 201 to a left end position as shown on Fig. 10b.

In this case, the release condition defined by the predetermined release value of this force and the reset condition are identical.

The invention is not limited to the embodiments described above.

Furthermore, the actuator 201 can comprise a spring element configured to act against a movement of the actuator 201 in the direction 213. This causes a reset of the actuator 201 if it is not in the locking position at the right end of the total distance 214. This ensures that the actuator 201 is not accidentally placed in an intermediate position. The spring element is configured to generate a force while the actuator 201 is in the locking position which does not exceed the predetermined release value. Therefore, the actuator 201 can be locked despite of the spring element.

Furthermore, the actuation of the reset element 210 can be configured in a different way. For example the reset mechanism 209 comprises a spring element configured to act against the direction 213 on the reset element 210. Further, the reset mechanism 209 is comprising a locking mechanism configured to lock the reset element 210 when it is moved to a right end position as shown in Fig. 10a, for example by the button 207 on which a force of an operator is applied. The locking mechanism of the reset mechanism 209 is further configured to release the locking of the reset element 210, if a pneumatic pressure, especially a pneumatic confirmation pressure, is supplied to the reset port 211. After releasing the reset element 210, it is moved to the left by the force of the spring element and since the right side of the button 207 abuts to the contact portion 212, the actuator 201 is also moved to the left into the left end position on the total distance 214. The spring element has further to be configured to generate a force which is at least the predetermined release value. This embodiment has the advantage that only a small pneumatic pressure is needed to release the reset element 210.

In the embodiments shown in the Figures, each actuator 201, 201a is only configured to control one pneumatic pressure via one port 216, 216a. Furthermore, such a pneumatic control unit 215 can also comprise actuators which are configured to control at least two control pressures depending on the position of the actuator on the total distance 214.

The total distance can further be configured as a circle or as a part of a circle, wherein the actuator is than operated by rotation. Therefore, the actuator can further comprise a lever configured for manual rotation of the actuator.

Further, the counterpart 203 can be configured to deform elastically, wherein the tapered portion 204a is configured to be stiff. Furthermore, the counterpart 203 as well as the tapered portion 204a can be configured to deform elastically.

### LIST OF REFERENCE SIGNS

- 1: distribution device
- 2: air bellows
- 3: air spring valve
- 3a: air supply port
- 3b: connection port
- 3c: outlet port
- 3d: first confirmation port
- 3e: second confirmation port
- 4: air storage
- 5: raise and lowering control device
- 6: air bellow ports
- 7: cut off valve
- 7a: first control port
- 7b: second control port
- 7c: first port
- 7d: second port
- 7e: spring element
- 7f: second cut off valve
- 7g: control line
- 8: outlet port
- 9: shuttle valve
- 9a: raising control line
- 9b: lowering control line
- 9c: shuttle valve line
- 10: first valve
- 11: second valve
- 12: raising control port
- 13: lowering control port
- 14: air spring valve port
- 15: RTR reset port
- 16: air storage port
- 17: electric actuation
- 18: RTR valve
- 19: RTR output port
- 20: raising limitation port
- 21: raising limitation valve
- 22: raising limitation line
- 23: air spring suspension system
- 24: raising actuator
- 24a: first port
- 24b: second port
- 24c: reset port
- 24d: outlet port
- 25: lowering actuator
- 25a: first port
- 25b: second port
- 25c: reset port
- 25d: outlet port
- 26: RTR line
- 27: check valve
- 100: air storage
- 101: raising and lowering valve
- 102: air spring valve
- 103: air bellows
- 201: actuator
- 201a: second actuator
- 202: locking mechanism
- 203: counterpart
- 204: guidance
- 204a: tapered portion
- 205: sealing element
- 206: housing
- 207: button
- 207a: button
- 208: park and shunt valve
- 209: reset mechanism
- 210: reset element
- 211: reset port
- 212: contact portion
- 213: direction
- 214: total distance
- 215: pneumatic control unit
- 216: output port
- 217: chamber
- 218: sealing element
- BS: brake control system

## Claims

1. Cut off valve (7) for cutting off a communication between an air spring valve (3) and at least one air bellow (2) of a raise and lowering air spring suspension system for a vehicle, especially for a trailer, comprising:
- a first port (7c) configured to be connected to the air spring valve (3), and
- a second port (7d) configured to be connected to the at least one air bellow (2), wherein
the cut off valve (7) is configured to cut off a connection between the first port (7c) and the second port (7d) in reaction to a receiving of a first pneumatic control pressure, **characterized in that**
the cut off valve (7) is configured to connect the first port (7c) and the second port (7d) if no first pneumatic control pressure is supplied and/or in reaction to a receiving of a second pneumatic control pressure,
wherein the cut- off valve (7) comprises:
- a first control port (7a) configured to receive the first control pressure, and
- a piston with a first side configured to be pressurized by the first control pressure, and
- a second control port (7b) configured to receive the second control pressure, wherein the piston has a second side configured to be pressurized by the second control pressure and the piston is configured to move the cut off valve (7) in a connection position to connect the first port (7c) and the second port (7d) if the second side is pressurized by the second control pressure, and
- a spring element (7e) configured to move the cut off valve (7) in the connection position if no first control pressure is supplied.

2. Cut-off valve /7) according to claim 1,
wherein
the cut off valve (7) is configured to store the first pneumatic control pressure in a control line (7g) after switching to the disconnection position.

3. Pneumatic distribution device (1) for a raise and lowering air spring suspension system for a vehicle, wherein the distribution device (1) is configured to control an amount of air of at least one air bellow (3), comprising:
- a cut off valve (7) according to any of claims 1 or 2,
- an air spring valve port (14) configured to be connected to an air spring valve (3) and to the first port (7c) of the cut off valve (7),
- at least one air bellow port (6) configured to be connected to at least one air bellow (2) and to the second port (7d), and
- at least one air storage port (16) configured to be connected to at least one air storage (4), wherein
the pneumatic distribution device (1) is configured to control the amount of air of the at least one air bellow (3) in reaction to at least one pneumatic control signal.

4. Pneumatic distribution device (1) according to claim 3, comprising:
- a raising control line (9a) configured to receive a pneumatic raising control signal,
- a lowering control line (9b) configured to receive a pneumatic lowering control signal, and further comprising:
- a raising control port (12) configured to receive a pneumatic raising control signal and configured to supply the pneumatic raising control signal to the raising control line (9a), and
- a lowering control port (13) configured to receive a pneumatic lowering control signal and configured to supply the pneumatic lowering control signal to the lowering control line (9b), or
- at least one actuator (24, 25) configured to supply the pneumatic raising control signal to the raising control line (9a) and/or configured to supply the pneumatic lowering control signal to the lowering control line (9b).

5. Pneumatic distribution device (1) according to claim 4, wherein
the distribution device (1) is configured to cut off a connection between the air spring valve port (14) and the at least one air bellow port (6) by the cut off valve (7) in reaction to the pneumatic raising control signal or to the pneumatic lowering control signal which are supplied to the first control port (7a) of the cut off valve (7).

6. Pneumatic distribution device (1) according to claim 4 or 5, wherein
the distribution device (1) is configured to connect the at least one air bellow port (6) to the at least one air storage port (16) in reaction to the pneumatic raising control signal and to connect the at least one air bellow port (6) to an outlet port (8) in reaction to the pneumatic lowering control signal.

7. Pneumatic distribution device (1) according to claim 6, comprising:
- a first valve (10) configured to connect the at least one air storage port (16) to a second valve (11) if the pneumatic raising control signal is supplied to the raising control line (9a), and
- the second valve (11) configured to connect the at least one air bellow port (6) to the first valve (10) if the pneumatic raising control signal is supplied to the raising control line (9a) or if the pneumatic lowering control signal is supplied to the lowering control line (9b).

8. Pneumatic distribution device (1) according to claim 7, wherein
the first valve (10) is configured to connect the second valve (11) to the outlet port (8) if no pneumatic raising control signal is supplied to the raising control line (9a), and
the second valve (11) is configured to cut off the connection between the at least one air bellow port (6) and the first valve (10) if no pneumatic raising control signal is supplied to the raising control line (9a) or no pneumatic lowering control signal is supplied to the lowering control line (9b).

9. Pneumatic distribution device (1) according to any of claims 3 to 8, comprising:
- a RTR valve (18) configured to connect the second control port (7b) of the cut off valve (7) to the at least one air storage port (16) in reaction to a RTR confirmation signal or to a manual actuation, and/or
- a RTR valve configured to evacuate the first control port (7a) of the cut off valve (7) in reaction to the RTR confirmation signal or to the manual actuation.

10. Pneumatic distribution device (1) according to any of claims 3 to 9, comprising:
- a RTR reset port (15) configured to be connected to an external RTR valve and wherein the RTR reset port (15) is connected to the second control port (7b) of the cut off valve (7) or to the first control port (7a) of the cut off valve (7).

11. Pneumatic distribution device (1) according to claim 9 or 10, wherein
the RTR confirmation signal is an electrical or pneumatic signal.

12. Pneumatic distribution device (1) according to any of claims 3 to 10, comprising:
- a raising limitation valve (21) configured to evacuate the raising control line (9a) in reaction to a raising limitation signal, and
- a raising limitation line (22) to supply the raising limitation signal to the raising limitation valve (21).

13. Pneumatic distribution device (1) according to claim 12, comprising:
- a raising limitation port (20) connected to the raising limitation line (22) and configured to be connected to the air spring valve (3).

14. Air spring suspension system (23) for a vehicle body, comprising:
- a pneumatic distribution device (1) according to any of claims 3 to 13,
- an air spring valve (3) connected to the air spring valve port (14) of the pneumatic distribution device (1),
- at least one air bellow (2) connected to the at least one air bellow port (6) of the pneumatic distribution device (1), and
- an air storage (4) connected to the at least one air storage port (16) of the pneumatic distribution device (1).

15. Air spring suspension system (23) for a vehicle body according to claim 14, comprising:
- at least one actuator (24, 25) connected to the raising control port (12) and/or to the lowering control port (13) of the distribution device (1), wherein the at least one actuator (24, 25) is configured to supply a raising and/or lowering control signal to the raising control port (12) and/or the lowering control port (13).

16. Air spring suspension system (23) according to claim 15, wherein
the at least one actuator (24, 25) comprising a reset port (24c, 25c) which is connected to a RTR output port (19) of the distribution device (1) and the at least one actuator (24, 25) is configured to switch in a position whereby no raising or lowering signal is supplied to the raising or lowering control port if compressed air is supplied to the reset port (24c, 25c) of the at least one actuator (24, 25), and/or wherein
the air spring suspension system (23) comprising an external RTR valve connected to the RTR reset port (15) of the distribution device (1) wherein the external RTR valve is configured to connect the RTR input port (26) to the at least one air storage port (16) in reaction to a RTR confirmation signal or to a manual actuation or wherein the external RTR valve is configured to evacuate the RTR reset port (15) in reaction to the RTR confirmation signal or to the manual actuation.

## Patentansprüche

1. Sperrventil (7) zum Absperren einer Kommunikation zwischen einem Luftfederventil (3) und mindestens einem Luftbalg (2) eines Luftfederaufhängungssystems zum Heben und Senken für ein Fahrzeug, insbesondere für einen Anhänger, umfassend:
- einen ersten Anschluss (7c), der konfiguriert ist, um mit dem Luftfederventil (3) verbunden zu werden, und
- einen zweiten Anschluss (7d), der konfiguriert ist, um mit dem mindestens einen Luftbalg (2) verbunden zu werden, wobei
das Sperrventil (7) konfiguriert ist, um eine Verbindung zwischen dem ersten Anschluss (7c) und dem zweiten Anschluss (7d) als Reaktion auf ein Empfangen eines ersten pneumatischen Steuerdrucks zu sperren, **dadurch gekennzeichnet, dass**
das Sperrventil (7) konfiguriert ist, um den ersten Anschluss (7c) und den zweiten Anschluss (7d) zu verbinden, wenn kein erster pneumatischer Steuerdruck zugeführt wird und/oder als Reaktion auf ein Empfangen eines zweiten pneumatischen Steuerdrucks, wobei das Sperrventil (7) umfasst:
- einen ersten Steueranschluss (7a), der konfiguriert ist, um den ersten Steuerdruck zu empfangen, und
- einen Kolben mit einer ersten Seite, die konfiguriert ist, um durch den ersten Steuerdruck unter Druck gesetzt zu werden, und
- einen zweiten Steueranschluss (7b), der konfiguriert ist, um den zweiten Steuerdruck zu empfangen, wobei der Kolben eine zweite Seite aufweist, die konfiguriert ist, um durch den zweiten Steuerdruck unter Druck gesetzt zu werden, und der Kolben konfiguriert ist, um das Sperrventil (7) in eine Verbindungsposition zu bewegen, um den ersten Anschluss (7c) und den zweiten Anschluss (7d) zu verbinden, wenn die zweite Seite durch den zweiten Steuerdruck unter Druck gesetzt wird, und
- ein Federelement (7e), das konfiguriert ist, um das Sperrventil (7) in die Verbindungsposition zu bewegen, wenn kein erster Steuerdruck zugeführt wird.

2. Sperrventil (7) nach Anspruch 1, wobei
das Sperrventil (7) konfiguriert ist, um nach einem Umschalten in die Trennposition den ersten pneumatischen Steuerdruck in einer Steuerleitung (7g) zu speichern.

3. Pneumatische Verteilungsvorrichtung (1) für ein Luftfederaufhängungssystem zum Heben und Senken für ein Fahrzeug, wobei die Verteilungsvorrichtung (1) konfiguriert ist, um eine Luftmenge von mindestens einem Luftbalg (3) zu steuern, umfassend:
- ein Sperrventil (7) nach einem der Ansprüche 1 oder 2,
- einen Luftfederventilanschluss (14), der konfiguriert ist, um mit einem Luftfederventil (3) und mit dem ersten Anschluss (7c) des Sperrventils (7) verbunden zu werden,
- mindestens einen Luftbalganschluss (6), der konfiguriert ist, um mit mindestens einem Luftbalg (2) und mit dem zweiten Anschluss (7d) verbunden zu werden, und
- mindestens einen Luftspeicheranschluss (16), der konfiguriert ist, um mit dem mindestens einen Luftspeicher (4) verbunden zu werden, wobei
die pneumatische Verteilungsvorrichtung (1) konfiguriert ist, um die Luftmenge des mindestens einen Luftbalgs (3) als Reaktion auf mindestens ein pneumatisches Steuersignal zu steuern.

4. Pneumatische Verteilungsvorrichtung (1) nach Anspruch 3, umfassend:
- eine Hebesteuerleitung (9a), die konfiguriert ist, um ein pneumatisches Hebesteuersignal zu empfangen,
- eine Senksteuerleitung (9b), die konfiguriert ist, um ein pneumatisches Senksteuersignal zu empfangen, und weiter umfassend:
- einen Hebesteueranschluss (12), der konfiguriert ist, um ein pneumatisches Hebesteuersignal zu empfangen, und konfiguriert ist, um der Hebesteuerleitung (9a) das pneumatische Hebesteuersignal zuzuführen, und
- einen Senksteueranschluss (13), der konfiguriert ist, um ein pneumatisches Senksteuersignal zu empfangen, und konfiguriert ist, um der Senksteuerleitung (9b) das pneumatische Senksteuersignal zuzuführen, oder
- mindestens eine Betätigungsvorrichtung (24, 25), die konfiguriert ist, um der Hebesteuerleitung (9a) das pneumatische Hebesteuersignal zuzuführen, und/oder konfiguriert ist, um der Senksteuerleitung (9b) das pneumatische Senksteuersignal zuzuführen.

5. Pneumatische Verteilungsvorrichtung (1) nach Anspruch 4, wobei
die Verteilungsvorrichtung (1) konfiguriert ist, um eine Verbindung zwischen dem Luftfederventilanschluss (14) und dem mindestens einen Luftbalganschluss (6) durch das Sperrventil (7) als Reaktion auf das pneumatische Hebesteuersignal oder das pneumatische Senksteuersignal zu sperren, die dem ersten Steueranschluss (7a) des Sperrventils (7) zugeführt werden.

6. Pneumatische Verteilungsmessvorrichtung (1) nach Anspruch 4 oder 5, wobei
die Verteilungsvorrichtung (1) konfiguriert ist, um den mindestens einen Luftbalganschluss (6) als Reaktion auf das pneumatische Hebesteuersignal mit dem mindestens einen Luftspeicheranschluss (16) zu verbinden und den mindestens einen Luftbalganschluss (6) als Reaktion auf das pneumatische Senksteuersignal mit einem Auslassanschluss (8) zu verbinden.

7. Pneumatische Verteilungsvorrichtung (1) nach Anspruch 6, umfassend:
- ein erstes Ventil (10), das konfiguriert ist, um den mindestens einen Luftspeicheranschluss (16) mit einem zweiten Ventil (11) zu verbinden, wenn der Hebesteuerleitung (9a) das pneumatische Hebesteuersignal zugeführt wird, und
- das zweite Ventil (11), das konfiguriert ist, um den mindestens einen Luftbalganschluss (6) mit dem ersten Ventil (10) zu verbinden, wenn der Hebesteuerleitung (9a) das pneumatische Hebesteuersignal zugeführt wird oder wenn der Senksteuerleitung (9b) das pneumatische Senksteuersignal zugeführt wird.

8. Pneumatische Verteilungsvorrichtung (1) nach Anspruch 7, wobei
das erste Ventil (10) konfiguriert ist, um das zweite Ventil (11) mit dem Auslassanschluss (8) zu verbinden, wenn der Hebesteuerleitung (9a) kein pneumatisches Hebesteuersignal zugeführt wird, und
das zweite Ventil (11) konfiguriert ist, um die Verbindung zwischen dem mindestens einen Luftbalganschluss (6) und dem ersten Ventil (10) zu sperren, wenn der Hebesteuerleitung (9a) kein pneumatisches Hebesteuersignal zugeführt wird oder der Senksteuerleitung (9b) kein pneumatisches Senksteuersignal zugeführt wird.

9. Pneumatische Verteilungsvorrichtung (1) nach einem der Ansprüche 3 bis 8, umfassend:
- ein RTR-Ventil (18), das konfiguriert ist, um den zweiten Steueranschluss (7b) des Sperrventils (7) als Reaktion auf ein RTR-Bestätigungssignal oder eine manuelle Betätigung mit dem mindestens einen Luftspeicheranschluss (16) zu verbinden, und/oder
- ein RTR-Ventil, das konfiguriert ist, um den ersten Steueranschluss (7a) des Sperrventils (7) als Reaktion auf das RTR-Bestätigungssignal oder die manuelle Betätigung zu evakuieren.

10. Pneumatische Verteilungsvorrichtung (1) nach einem der Ansprüche 3 bis 9, umfassend:
- einen RTR-Rückstellanschluss (15), der konfiguriert ist, um mit einem externen RTR-Ventil verbunden zu werden, und wobei der RTR-Rückstellanschluss (15) mit dem zweiten Steueranschluss (7b) des Sperrventils (7) oder mit dem ersten Steueranschluss (7a) des Sperrventils (7) verbunden ist.

11. Pneumatische Verteilervorrichtung (1) nach Anspruch 9 oder 10, wobei das RTR-Bestätigungssignal ein elektrisches oder pneumatisches Signal ist.

12. Pneumatische Verteilungsvorrichtung (1) nach einem der Ansprüche 3 bis 10, umfassend:
- ein Hebebegrenzungsventil (21), das konfiguriert ist, um die Hebesteuerleitung (9a) als Reaktion auf ein Hebebegrenzungssignal zu evakuieren, und
- eine Hebebegrenzungsleitung (22), um dem Hebebegrenzungsventil (21) das Hebebegrenzungssignal zuzuführen.

13. Pneumatische Verteilungsvorrichtung (1) nach Anspruch 12, umfassend:
- einen Hebebegrenzungsanschluss (20), der mit der Hebebegrenzungsleitung (22) verbunden ist und konfiguriert ist, um mit dem Luftfederventil (3) verbunden zu werden.

14. Luftfederaufhängungssystem (23) für einen Fahrzeugaufbau, umfassend:
- eine pneumatische Verteilungsvorrichtung (1) nach einem der Ansprüche 3 bis 13,
- ein Luftfederventil (3), das mit dem Luftfederventilanschluss (14) der pneumatischen Verteilungsvorrichtung (1) verbunden ist,
- mindestens einen Luftbalg (2), der mit dem mindestens einen Luftbalganschluss (6) der pneumatischen Verteilungsvorrichtung (1) verbunden ist, und
- einen Luftspeicher (4), der mit dem mindestens einen Luftspeicheranschluss (16) der pneumatischen Verteilungsvorrichtung (1) verbunden ist.

15. Luftfederaufhängungssystem (23) für einen Fahrzeugaufbau nach Anspruch 14, umfassend:
- mindestens eine Betätigungsvorrichtung (24, 25), die mit dem Hebesteueranschluss (12) und/oder dem Senksteueranschluss (13) der Verteilungsvorrichtung (1) verbunden ist, wobei die mindestens eine Betätigungsvorrichtung (24, 25) konfiguriert ist, um dem Hebesteueranschluss (12) und/oder dem Senksteueranschluss (13) ein Hebe- und/oder Senksteuersignal zuzuführen.

16. Luftfederaufhängungssystem (23) nach Anspruch 15, wobei
die mindestens eine Betätigungsvorrichtung (24, 25) einen Rückstellanschluss (24c, 25c) umfasst, der mit einem RTR-Ausgangsanschluss (19) der Verteilungsvorrichtung (1) verbunden ist, und die mindestens eine Betätigungsvorrichtung (24, 25) konfiguriert ist, um in eine Position umgeschaltet zu werden, wodurch dem Hebe- oder Senksteueranschluss kein Hebe- oder Senksignal zugeführt wird, wenn dem Rückstellanschluss (24c, 25c) der mindestens einen Betätigungsvorrichtung (24, 25) Druckluft zugeführt wird, und/oder wobei
das Luftfederaufhängungssystem (23) ein externes RTR-Ventil umfasst, das mit dem RTR-Rückstellanschluss (15) der Verteilungsvorrichtung (1) verbunden ist, wobei das externe RTR-Ventil konfiguriert ist, um den RTR-Eingangsanschluss (26) als Reaktion auf ein RTR-Bestätigungssignal oder eine manuelle Betätigung mit dem mindestens einen Luftspeicheranschluss (16) zu verbinden, oder wobei das externe RTR-Ventil konfiguriert ist, um den RTR-Rückstellanschluss (15) als Reaktion auf das RTR-Bestätigungssignal oder die manuelle Betätigung zu evakuieren.

## Revendications

1. Soupape d'arrêt (7) pour couper une communication entre une soupape à ressort pneumatique (3) et au moins un soufflet pneumatique (2) d'un système de suspension à ressort pneumatique de levage et d'abaissement pour un véhicule, en particulier pour une remorque, comprenant :
- un premier orifice (7c) configuré pour être relié à la soupape à ressort pneumatique (3), et
- un second orifice (7d) configuré pour être relié au au moins un soufflet pneumatique (2), dans laquelle
la soupape d'arrêt (7) est configurée pour couper une liaison entre le premier orifice (7c) et le second orifice (7d) en réaction à une réception d'une première pression de commande pneumatique, **caractérisée en ce que**
la soupape d'arrêt (7) est configurée pour relier le premier orifice (7c) et le seconde orifice (7d) si aucune première pression de commande pneumatique n'est fournie et/ou en réaction à la réception d'une seconde pression de commande pneumatique, dans laquelle la soupape d'arrêt (7) comprend :
- un premier orifice de commande (7a) configuré pour recevoir la première pression de commande, et
- un piston avec un premier côté configuré pour être mis sous pression par la première pression de commande, et
- un second orifice de commande (7b) configuré pour recevoir la seconde pression de commande, dans laquelle le piston présente un second côté configuré pour être mis sous pression par la seconde pression de commande et le piston est configuré pour déplacer la soupape d'arrêt (7) dans une position de liaison pour relier le premier orifice (7c) et le second orifice (7d) si le second côté est mis sous pression par la seconde pression de commande, et
- un élément à ressort (7e) configuré pour déplacer la soupape d'arrêt (7) dans la position de liaison si aucune première pression de commande n'est fournie.

2. Soupape d'arrêt (7) selon la revendication 1, dans laquelle
la soupape d'arrêt (7) est configurée pour stocker la première pression de commande pneumatique dans une conduite de commande (7g) après le passage en position de désolidarisation.

3. Dispositif de distribution pneumatique (1) pour un système de suspension à ressort pneumatique de levage et d'abaissement pour un véhicule, dans lequel le dispositif de distribution (1) est configuré pour commander une quantité d'air d'au moins un soufflet pneumatique (3), comprenant :
- une soupape d'arrêt (7) selon l'une quelconque des revendications 1 ou 2,
- un orifice (14) de soupape à ressort pneumatique configuré pour être relié à une soupape à ressort pneumatique (3) et au premier orifice (7c) de la soupape d'arrêt (7),
- au moins un orifice (6) de soufflet pneumatique configuré pour être relié à au moins un soufflet pneumatique (2) et au second orifice (7d), et
- au moins un orifice (16) de stockage d'air configuré pour être relié à au moins un stockage d'air (4), dans lequel
le dispositif de distribution pneumatique (1) est configuré pour commander la quantité d'air du au moins un soufflet pneumatique (3) en réaction à au moins un signal de commande pneumatique.

4. Dispositif de distribution pneumatique (1) selon la revendication 3, comprenant :
- une conduite de commande de levage (9a) configurée pour recevoir un signal de commande de levage pneumatique,
- une conduite de commande d'abaissement (9b) configurée pour recevoir un signal de commande d'abaissement pneumatique, et comprenant en outre :
- un orifice de commande de levage (12) configuré pour recevoir un signal de commande de levage pneumatique et configuré pour fournir le signal de commande de levage pneumatique à la conduite de commande de levage (9a), et
- un orifice de commande d'abaissement (13) configuré pour recevoir un signal de commande d'abaissement pneumatique et configuré pour fournir le signal de commande d'abaissement pneumatique à la conduite de commande d'abaissement (9b), ou
- au moins un actionneur (24, 25) configuré pour fournir le signal de commande de levage pneumatique à la conduite de commande de levage (9a) et/ou configuré pour fournir le signal de commande d'abaissement pneumatique à la conduite de commande d'abaissement (9b).

5. Dispositif de distribution pneumatique (1) selon la revendication 4, dans lequel
le dispositif de distribution (1) est configuré pour couper une liaison entre l'orifice (14) de soupape à ressort pneumatique et le au moins un orifice (6) de soufflet pneumatique par la soupape d'arrêt (7) en réaction au signal de commande de levage pneumatique ou au signal de commande d'abaissement pneumatique qui sont fournis au premier orifice de commande (7a) de la soupape d'arrêt (7).

6. Dispositif de distribution pneumatique (1) selon la revendication 4 ou 5, dans lequel
le dispositif de distribution (1) est configuré pour relier le au moins un orifice (6) de soufflet pneumatique au au moins un orifice (16) de stockage d'air en réaction au signal de commande de levage pneumatique et pour relier le au moins un orifice (6) de soufflet pneumatique à un orifice de sortie (8) en réaction au signal de commande d'abaissement pneumatique.

7. Dispositif de distribution pneumatique (1) selon la revendication 6, comprenant :
- une première soupape (10) configurée pour relier le au moins un orifice (16) de stockage d'air à une seconde soupape (11) si le signal de commande de levage pneumatique est fourni à la conduite de commande de levage (9a), et
- la seconde soupape (11) configurée pour relier le au moins un orifice (6) de soufflet pneumatique à la première soupape (10) si le signal de commande de levage pneumatique est fourni à la conduite de commande de levage (9a) ou si le signal de commande d'abaissement pneumatique est fourni à la conduite de commande d'abaissement (9b).

8. Dispositif de distribution pneumatique (1) selon la revendication 7, dans lequel
la première soupape (10) est configurée pour relier la seconde soupape (11) à l'orifice de sortie (8) si aucun signal de commande de levage pneumatique n'est fourni à la conduite de commande de levage (9a), et
la seconde soupape (11) est configurée pour couper la liaison entre le au moins un orifice (6) de soufflet pneumatique et la première soupape (10) si aucun signal de commande de levage pneumatique n'est fourni à la conduite de commande de levage (9a) ou si aucun signal de commande d'abaissement pneumatique n'est fourni à la conduite de commande d'abaissement (9b).

9. Dispositif de distribution pneumatique (1) selon l'une quelconque des revendications 3 à 8, comprenant :
- une soupape RTR (18) configurée pour relier le second orifice de commande (7b) de la soupape d'arrêt (7) au au moins un orifice (16) de stockage d'air en réaction à un signal de confirmation RTR ou à un actionnement manuel, et/ou
- une soupape RTR configurée pour libérer le premier orifice de commande (7a) de la soupape d'arrêt (7) en réaction au signal de confirmation RTR ou à l'actionnement manuel.

10. Dispositif de distribution pneumatique (1) selon l'une quelconque des revendications 3 à 9, comprenant :
- un orifice de réinitialisation RTR (15) configuré pour être relié à une soupape RTR externe et dans lequel l'orifice de réinitialisation RTR (15) est relié au second orifice de commande (7b) de la soupape d'arrêt (7) ou au premier orifice de commande (7a) de la soupape d'arrêt (7).

11. Dispositif de distribution pneumatique (1) selon la revendication 9 ou 10, dans lequel
le signal de confirmation RTR est un signal électrique ou pneumatique.

12. Dispositif de distribution pneumatique (1) selon l'une quelconque des revendications 3 à 10, comprenant :
- une soupape de limitation de levage (21) configurée pour vider la conduite de commande de levage (9a) en réaction à un signal de limitation de levage, et
- une conduite de limitation de levage (22) pour fournir le signal de limitation de levage à la soupape de limitation de levage (21).

13. Dispositif de distribution pneumatique (1) selon la revendication 12, comprenant :
- un orifice de limitation de levage (20) relié à la conduite de limitation de levage (22) et configuré pour être relié à la soupape à ressort pneumatique (3).

14. Système de suspension à ressort pneumatique (23) pour une carrosserie de véhicule, comprenant :
- un dispositif de distribution pneumatique (1) selon l'une quelconque des revendications 3 à 13,
- une soupape à ressort pneumatique (3) reliée à l'orifice (14) de soupape à ressort pneumatique du dispositif de distribution pneumatique (1),
- au moins un soufflet pneumatique (2) relié au au moins un orifice (6) de soufflet pneumatique du dispositif de distribution pneumatique (1), et
- un stockage d'air (4) relié au au moins un orifice (16) de stockage d'air du dispositif de distribution pneumatique (1).

15. Système de suspension à ressort pneumatique (23) pour une carrosserie de véhicule selon la revendication 14, comprenant :
- au moins un actionneur (24, 25) relié à l'orifice de commande de levage (12) et/ou à l'orifice de commande d'abaissement (13) du dispositif de distribution (1), dans lequel le au moins un actionneur (24, 25) est configuré pour fournir un signal de commande de levage et/ou d'abaissement à l'orifice de commande de levage (12) et/ou à l'orifice de commande d'abaissement (13).

16. Système de suspension à ressort pneumatique (23) selon la revendication 15, dans lequel
le au moins un actionneur (24, 25) comprenant un orifice de réinitialisation (24c, 25c) qui est relié à un orifice de sortie RTR (19) du dispositif de distribution (1) et le au moins un actionneur (24, 25) est configuré pour passer dans une position selon laquelle aucun signal de levage ou d'abaissement n'est fourni à l'orifice de commande de levage ou d'abaissement si de l'air comprimé est fourni à l'orifice de réinitialisation (24c, 25c) du au moins un actionneur (24, 25), et/ou dans lequel
le système de suspension à ressort pneumatique (23) comprenant une soupape RTR externe reliée à l'orifice de réinitialisation RTR (15) du dispositif de distribution (1), dans lequel la soupape RTR externe est configurée pour relier l'orifice d'entrée RTR (26) au au moins un orifice (16) de stockage d'air en réaction à un signal de confirmation RTR ou à un actionnement manuel ou dans lequel la soupape RTR externe est configurée pour libérer l'orifice de réinitialisation RTR (15) en réaction au signal de confirmation RTR ou à l'actionnement manuel.
